# EUROPEAN PATENT APPLICATION

(11) **EP 4 728 844 A1**
(43) Date of publication of application: **22.04.2026**
(21) Application number: 25209299.4
(22) Date of filing: 16.10.2025
(51) Int. Cl.: A01B 69/04, A01D 41/127

(54) **AUTONOMOUS TRAVEL METHOD, AUTONOMOUS TRAVEL PROGRAM, AND AUTONOMOUS TRAVEL SYSTEM**

(30) Priority: 17.10.2024 JP 2024181435
(71) Applicant: Yanmar Holdings Co., Ltd., Osaka-shi, Osaka (JP)
(72) Inventor: NISHII, Yasuto, Okayama-shi (JP); YAMAGUCHI, Yuji, Okayama-shi (JP); MURAYAMA, Masaaki, Okayama-shi (JP); LEE, Seungkyu, Okayama-shi (JP); SATO, Shoichi, Okayama-shi (JP)
(74) Representative: Sekiguchi, Kazuya

(57) **Abstract**

[Problem] Provided are an autonomous travel method, an autonomous travel program, and an autonomous travel system capable of improving work efficiency of work by a work vehicle that can autonomously travel.

[Solution] A travel system 10 is a system that causes a reaping unit 15 to perform reaping work while causing a combine harvester 1 to autonomously travel along a target route in a work area. A work processing unit 112 controls an operation (position) of the reaping unit 15 in the work area based on work region information including information on an unworked region where the reaping work has not finished and information on a worked region where the reaping work has finished.

## Description

### TECHNICAL FIELD

The present invention relates to a technique for causing a work vehicle to autonomously travel along a target route.

### BACKGROUND ART

Conventionally, systems that cause a work vehicle to execute predetermined work while causing the work vehicle to autonomously travel along a preset target route in a field have been known. For example, there is known a system in which travel routes are set for a work area and a headland area, respectively, and a work machine is caused to execute predetermined work while causing a work vehicle to autonomously travel along each of the travel routes (see, for example, Patent Document 1).

### PRIOR ART DOCUMENT

### PATENT DOCUMENT

Patent Document 1: JP-B2-6253678

### SUMMARY OF INVENTION

### TECHNICAL PROBLEM

However, in the related art, a position (posture) of the work machine is controlled in association with each of the travel routes by setting, for example, the work machine to a work position when the work vehicle is caused to travel along the travel route (work route) of the work area, and setting the work machine to a non-work position when the work vehicle is caused to travel along the travel route (turning route) of the headland area. Therefore, for example, when a target route is set in an area where work has already been finished (for example, an area where reaping work has been finished by manual travel by an operator), the work vehicle autonomously travels and executes work in the area, which causes a problem that work efficiency deteriorates.

An object of the present invention is to provide an autonomous travel method, an autonomous travel program, and an autonomous travel system capable of improving work efficiency of work by a work vehicle that can autonomously travel.

### SOLUTION TO PROBLEM

An autonomous travel method according to the present invention is a method for causing a work machine to perform predetermined work while causing a work vehicle to autonomously travel along a target route in a work area. The autonomous travel method includes controlling an operation of the work machine based on work region information including information on an unworked region where the work has not finished in the work area and information on a worked region where the work has finished.

An autonomous travel program according to the present invention is a program for causing a work machine to perform predetermined work while causing a work vehicle to autonomously travel along a target route in a work area. The autonomous travel program is a program for causing one or a plurality of processors to execute controlling an operation of the work machine based on work region information including information on an unworked region where the work has not finished in the work area and information on a worked region where the work has finished.

An autonomous travel system according to the present invention is a system that causes a work machine to perform predetermined work while causing a work vehicle to autonomously travel along a target route in a work area. The autonomous travel system controls an operation of the work machine based on work region information including information on an unworked region where the work has not finished in the work area and information on a worked region where the work has finished.

### ADVANTAGEOUS EFFECTS OF INVENTION

According to the present invention, it is possible to provide the autonomous travel method, the autonomous travel program, and the autonomous travel system capable of improving the work efficiency of work by the work vehicle that can autonomously travel.

### BRIEF DESCRIPTION OF DRAWINGS

Fig. 1 is a functional block diagram showing a configuration of a travel system according to an embodiment of the present invention;
Fig. 2 is an external view showing a configuration of a combine harvester according to the embodiment of the present invention;
Fig. 3 is a view showing an example of a target route set in a field according to the embodiment of the present invention;
Fig. 4A is a view showing an example of a work procedure of the combine harvester according to the embodiment of the present invention;
Fig. 4B is a view showing an example of the work procedure of the combine harvester according to the embodiment of the present invention;
Fig. 4C is a view showing an example of the work procedure of the combine harvester according to the embodiment of the present invention;
Fig. 5A is a view showing an example of corner reaping work of the combine harvester according to the embodiment of the present invention;
Fig. 5B is a view showing an example of the corner reaping work of the combine harvester according to the embodiment of the present invention;
Fig. 6A is a view showing an example of an operation screen displayed on an operation terminal according to the embodiment of the present invention;
Fig. 6B is a view showing an example of a route creation result screen displayed on the operation terminal according to the embodiment of the present invention;
Fig. 7A is a view showing a specific example of a position (non-work height) of a reaping unit of the combine harvester according to the embodiment of the present invention;
Fig. 7B is a view showing a specific example of a position (intermediate height) of the reaping unit of the combine harvester according to the embodiment of the present invention;
Fig. 7C is a view showing a specific example of a position (work height) of the reaping unit of the combine harvester according to the embodiment of the present invention;
Fig. 8A is a view showing a specific example of reaping work in an outermost peripheral area in the combine harvester according to the embodiment of the present invention;
Fig. 8B is a view showing a specific example of the reaping work in the outermost peripheral area in the combine harvester according to the embodiment of the present invention;
Fig. 8C is a view showing a specific example of the reaping work in the outermost peripheral area in the combine harvester according to the embodiment of the present invention;
Fig. 8D is a view showing a specific example of the reaping work in the outermost peripheral area in the combine harvester according to the embodiment of the present invention;
Fig. 8E is a view showing a specific example of the reaping work in the outermost peripheral area in the combine harvester according to the embodiment of the present invention;
Fig. 8F is a view showing a specific example of turning travel in the outermost peripheral area in the combine harvester according to the embodiment of the present invention;
Fig. 9 is a view showing a state in which the reaping work in the outermost peripheral area of the field according to the embodiment of the present invention is completed;
Fig. 10 is a view showing an example of an inner peripheral route (a corner reaping route) at a corner of the field according to the embodiment of the present invention;
Fig. 11 is a view showing an example of the inner peripheral route (a turning route) at the corner of the field according to the embodiment of the present invention;
Fig. 12 is a view showing an example of the inner peripheral route in an inner peripheral area of the field according to the embodiment of the present invention;
Fig. 13 is a view showing another example of the corner reaping route according to the embodiment of the present invention;
Fig. 14 is a view showing another method for generating a corner reaping route according to an embodiment of the present invention;
Fig. 15 is a view showing another method for generating a corner reaping route according to an embodiment of the present invention;
Fig. 16 is a flowchart showing an example of a procedure of inner peripheral route generation processing executed by the travel system according to the embodiment of the present invention;
Fig. 17A is a view showing a state in which the field according to the embodiment of the present invention is divided into a lattice shape;
Fig. 17B is a view showing position information of each division of the field according to the embodiment of the present invention;
Fig. 18 is a view showing a specific example of a work rate calculated for each division of the field according to the embodiment of the present invention;
Fig. 19 is a view showing an example of work region information stored in the travel system according to the embodiment of the present invention;
Fig. 20A is a view showing an example of a travel method of the combine harvester at the corner according to the embodiment of the present invention;
Fig. 20B is a view showing an example of the travel method of the combine harvester at the corner according to the embodiment of the present invention;
Fig. 20C is a view showing an example of the travel method of the combine harvester at the corner according to the embodiment of the present invention;
Fig. 20D is a view showing an example of a travel method of the combine harvester in the inner peripheral area according to the embodiment of the present invention;
Fig. 20E is a view showing an example of the travel method of the combine harvester in the inner peripheral area according to the embodiment of the present invention;
Fig. 21 is a view showing a specific example of the work rate calculated for each division of the field according to the embodiment of the present invention;
Fig. 22 is a view showing an example of a travel screen displayed on the operation terminal according to the embodiment of the present invention;
Fig. 23 is a flowchart showing an example of a procedure of autonomous travel processing executed by the travel system according to the embodiment of the present invention;
Fig. 24A is a view for describing an operation of the reaping unit of the combine harvester according to the embodiment of the present invention;
Fig. 24B is a view for describing the operation of the reaping unit of the combine harvester according to the embodiment of the present invention;
Fig. 25 is a flowchart showing an example of a procedure of operation control processing of the reaping unit executed by the travel system according to the embodiment of the present invention;
Fig. 26 is a view showing another example of the travel method of the combine harvester at the corner according to the embodiment of the present invention;
Fig. 27 is a view showing another example of the travel method of the combine harvester at the corner according to the embodiment of the present invention;
Fig. 28 is a view showing an example of a plurality of work target lines according to the embodiment of the present invention;
Fig. 29 is a view showing an example of a method of setting a work target line according to the embodiment of the present invention;
Fig. 30 is a view showing an example of a method of setting a terminal end of a work route according to the embodiment of the present invention;
Fig. 31A is a view showing a specific example of a work method at the corner according to the embodiment of the present invention;
Fig. 31B is a view showing a specific example of the work method at the corner according to the embodiment of the present invention;
Fig. 31C is a view showing a specific example of the work method at the corner according to the embodiment of the present invention;
Fig. 32A is a view showing a specific example of a travel method in a movement route at the corner according to the embodiment of the present invention;
Fig. 32B is a view showing a specific example of the travel method in the movement route at the corner according to the embodiment of the present invention;
Fig. 32C is a view showing a specific example of the travel method in the movement route at the corner according to the embodiment of the present invention;
Fig. 33A is a view showing a specific example of the turning route at the corner according to the embodiment of the present invention;
Fig. 33B is a view showing a specific example of the turning route at the corner according to the embodiment of the present invention;
Fig. 34 is a view showing a specific example of the work route at the corner according to the embodiment of the present invention;
Fig. 35 is a view showing a specific example of the work route at the corner according to the embodiment of the present invention;
Fig. 36A is a view showing a specific example of turning travel at the corner according to the embodiment of the present invention;
Fig. 36B is a view showing a specific example of the turning travel at the corner according to the embodiment of the present invention;
Fig. 36C is a view showing a specific example of the turning travel at the corner according to the embodiment of the present invention;
Fig. 36D is a view showing a specific example of the turning travel at the corner according to the embodiment of the present invention;
Fig. 36E is a view showing a specific example of the turning travel at the corner according to the embodiment of the present invention;
Fig. 36F is a view showing a specific example of the turning travel at the corner according to the embodiment of the present invention;
Fig. 36G is a view showing a specific example of the turning travel at the corner according to the embodiment of the present invention;
Fig. 36H is a view showing a specific example of the turning travel at the corner according to the embodiment of the present invention;
Fig. 37 is a flowchart showing an example of a procedure of turning route generation processing executed by the travel system according to the embodiment of the present invention;
Fig. 38 is a view showing a specific example of the travel method of the movement route at the corner according to the embodiment of the present invention;
Fig. 39A is a view showing a specific example of a method for generating the turning route at the corner according to the embodiment of the present invention;
Fig. 39B is a view showing a specific example of the method for generating the turning route at the corner according to the embodiment of the present invention;
Fig. 40A is a view showing a specific example of the turning route at the corner according to the embodiment of the present invention;
Fig. 40B is a view showing a specific example of the turning route at the corner according to the embodiment of the present invention; and
Fig. 40C is a view showing a specific example of the turning route at the corner according to the embodiment of the present invention.

### DESCRIPTION OF EMBODIMENTS

The following embodiments are embodied examples of the present invention, and do not limit the technical scope of the present invention.

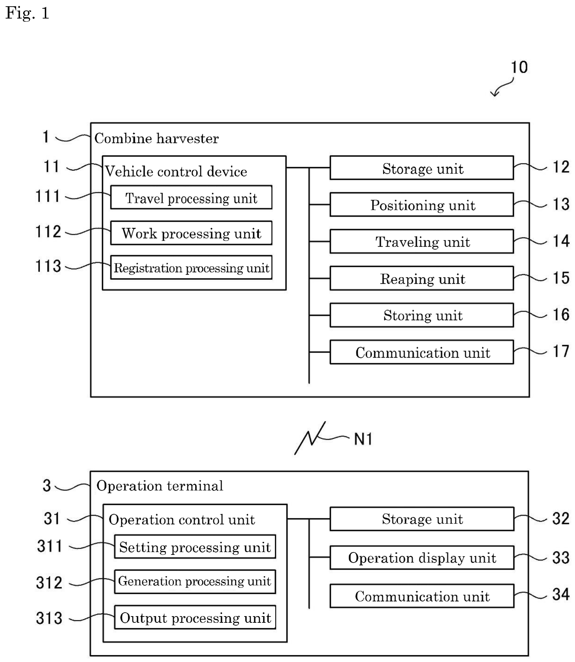

As an example of a work vehicle of the present invention, a combine harvester 1 will be described. As shown in Fig. 1, a travel system 10 according to an embodiment of the present invention includes the combine harvester 1 and an operation terminal 3. The combine harvester 1 and the operation terminal 3 can communicate with each other via a communication network N1. For example, the combine harvester 1 and the operation terminal 3 can communicate via a mobile telephone network, a packet network, or a wireless LAN.

The combine harvester 1 is a work vehicle that performs agricultural work such as reaping in a field (an example of predetermined work of the present invention). The combine harvester 1 performs work while traveling, and transmits, to the operation terminal 3, GNSS information of a GNSS antenna mounted on the combine harvester 1, that is, an own vehicle position of the combine harvester 1, as measurement point data.

In addition, the combine harvester 1 can perform autonomous travel along a preset target route. Note that the combine harvester 1 may be configured to perform manual travel in a partial area (for example, an outermost peripheral area) of the field and perform autonomous travel in another area (for example, an inner peripheral area). In addition, the combine harvester 1 may be configured to receive various types of setting information from the operation terminal 3 and perform autonomous travel according to the setting information.

The operation terminal 3 is a portable terminal capable of remotely operating the combine harvester 1, and includes, for example, a tablet terminal, a notebook personal computer, a smartphone, or the like. Note that an operation device similar to the operation terminal 3 may be mounted on the combine harvester 1.

An operator (worker) can perform setting operation on various setting items (for example, setting of an autonomous travel route) on the operation terminal 3. In addition, the operation terminal 3 displays information such as a work status and a travel status of the combine harvester 1 during autonomous travel. The operator can grasp the work status and the travel status on the operation terminal 3.

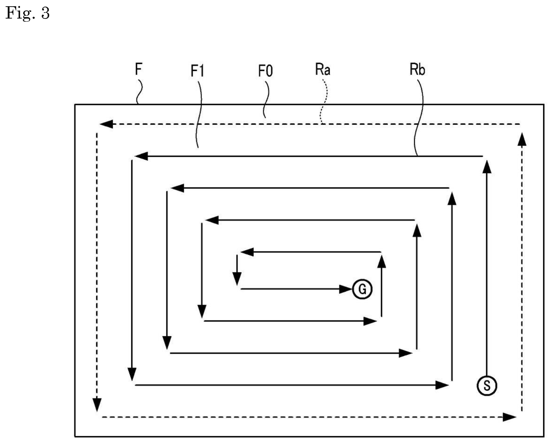

Fig. 3 shows an example of a target route R set for a field F. For example, in the field F, the combine harvester 1 performs reaping work while traveling along an outermost peripheral route Ra in an outermost peripheral area F0 on a boundary side of the field F, and performs reaping work while traveling along an inner peripheral route Rb in an inner peripheral area F1 inside the outermost peripheral area F0. The target route R includes the outermost peripheral route Ra and the inner peripheral route Rb. The combine harvester 1 may perform reaping work while traveling along the outermost peripheral route Ra in accordance with the manual operation (manual steering) by the operator, and perform reaping work while autonomously traveling along the inner peripheral route Rb. In addition, the combine harvester 1 may perform reaping work while autonomously traveling along the outermost peripheral route Ra and the inner peripheral route Rb.

In the present embodiment, description will be given by exemplifying a configuration in which the combine harvester 1 performs travel and reaping work (the corner reaping work) in at least a part (the corners and an angular portion of field F) of the outermost peripheral route Ra in accordance with the manual operation by the operator, and performs reaping work while autonomously traveling the inner peripheral area F1 along the inner peripheral route Rb (an autonomous travel route) from a start position S (the autonomous travel start position) to an end position G (the autonomous travel end position). Note that Fig. 3 shows a work method ("round reaping") in which the combine harvester 1 performs reaping work while circling from the start position S to the end position G from the outer peripheral side toward the inner peripheral side. However, as another embodiment, the combine harvester 1 may perform reaping work while reciprocating from the start position S to the end position G ("reciprocating reaping").

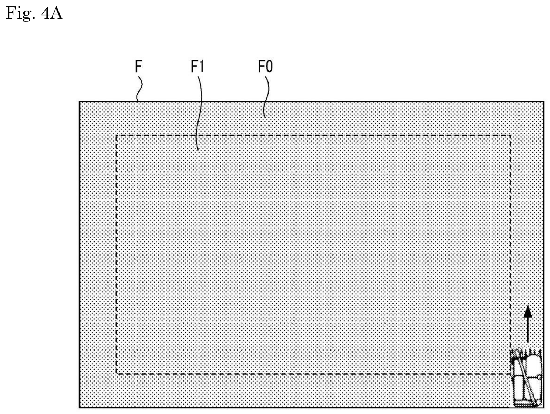

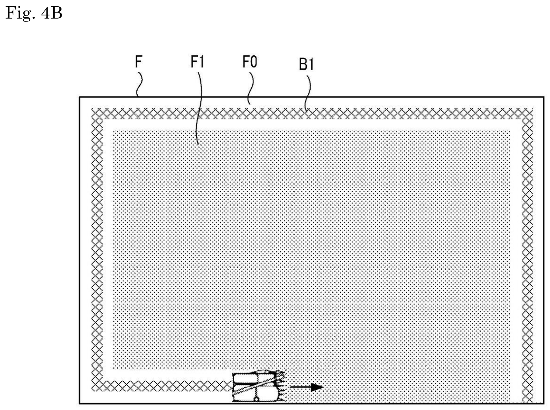

An example of a work procedure of the combine harvester 1 will be described with reference to Figs. 4A to 4C. First, as shown in Fig. 4A, when starting to travel in response to the operation of the operator at a predetermined position (for example, a corner) of the field F, the combine harvester 1 travels along an outer periphery of the field F in the outermost peripheral area F0 while reaping grain culms. In addition, when threshing the reaped grain culms, the combine harvester 1 discharges waste straws such as straw debris from the rear of a machine body thereof to the outside. As a result, as shown in Fig. 4B, waste straws B1 are accumulated on a traveling track of the combine harvester 1, and a waste straw row is formed on a route on which the combine harvester 1 has finished the reaping work. Note that the combine harvester 1 is set to discharge the waste straws of the reaped grain culms at positions of the grain culms to be reaped, and is configured to be able to grasp the positions, a width (lateral width of the waste straw row in the left-right direction), a length, and the like of the waste straws B1. For example, the waste straws B1 are discharged with a width narrower than a lateral width of the machine body with the center of the combine harvester 1 in the left-right direction as a reference.

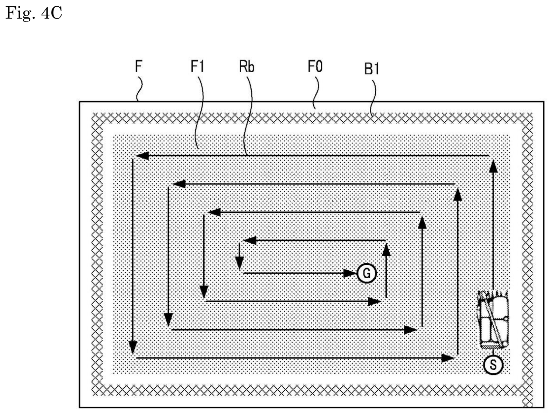

When ending the reaping work in the outermost peripheral area F0, the combine harvester 1 starts autonomous travel and reaping work from the start position S in the inner peripheral area F1 as shown in Fig. 4C. The combine harvester 1 performs the reaping work while autonomously traveling along the inner peripheral route Rb, and ends the autonomous travel and the reaping work when reaching the end position G.

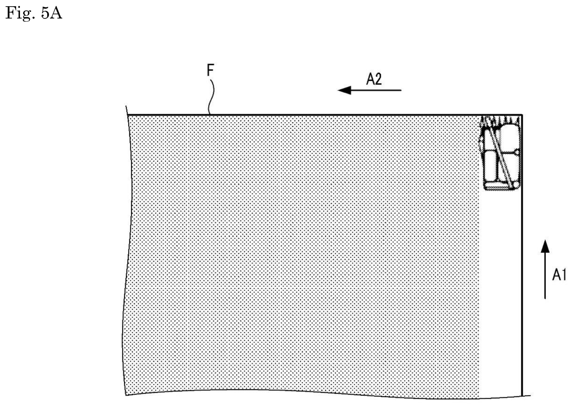

Here, the combine harvester 1 changes a direction (turns) at corners of the field F when performing reaping work. For example, as shown in Fig. 5A, the combine harvester 1 changes an orientation of the combine harvester 1 from a direction A1 to a direction A2 at a corner (an upper right corner in Fig. 5A) when performing reaping work on one side (a right side in Fig. 5A) of the field in the direction A1 and then performing reaping work on another side (an upper side in Fig. 5A) of the field in the direction A2. As described above, the combine harvester 1 needs a turning area for moving (turning) to the next route at each of the corners of the field F.

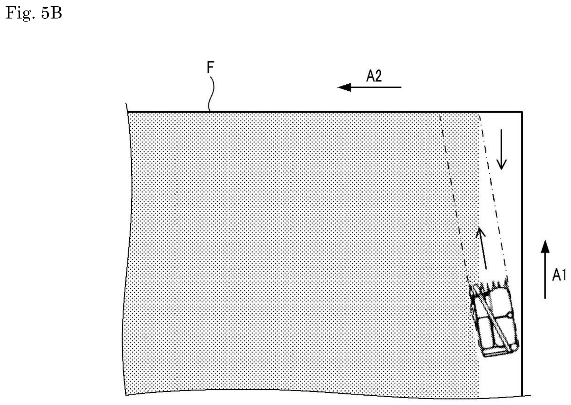

In order to generate the turning area, as shown in Fig. 5B, when finishing the reaping work in the direction A1 (see Fig. 5A), the combine harvester 1 travels backward to a predetermined position and stops, and changes a traveling direction and performs reaping work in an oblique direction while traveling forward at the corner. The combine harvester 1 repeatedly travels forward and backward until an area in which an orientation of a vehicle body can be changed to the direction A2 can be secured to perform the reaping work (hereinafter, referred to as corner reaping work) at the corner.

The travel system 10 according to the present embodiment includes a configuration (a "first configuration") for causing the combine harvester 1 to perform the corner reaping work in the outermost peripheral area F0, a configuration (a "second configuration") for generating the inner peripheral route Rb (the autonomous travel route) of the inner peripheral area F1, a configuration (a "third configuration") for controlling the autonomous travel of the combine harvester 1 on the generated inner peripheral route Rb, and a configuration (a "fourth configuration") for controlling an operation (for example, raising and lowering) of a work machine (the reaping unit 15) based on the generated inner peripheral route Rb. Specific examples of the first to fourth configurations will be described later. Note that the travel system 10 may have any one or a plurality of the first to fourth configurations.

### [Operation terminal 3]

As shown in Fig. 1, the operation terminal 3 is an information processing apparatus including an operation control unit 31, a storage unit 32, an operation display unit 33, a communication unit 34, and the like. The operation terminal 3 includes, for example, a tablet terminal.

The communication unit 34 is a communication interface for connecting the operation terminal 3 to the communication network N1 in a wired or wireless manner and executing data communication according to a predetermined communication protocol, with an external device such as one or a plurality of combine harvesters 1 via the communication network N1.

The operation display unit 33 is a user interface including a display unit such as a liquid crystal display or an organic EL display that displays various types of information, and an operation unit such as a touch panel, a mouse, or a keyboard that receives operation. The operator can operate the operation unit on a setting screen (not shown) displayed on the display unit to perform operation to register various types of setting information. In addition, the operator can operate the operation unit to instruct the combine harvester 1 to autonomously travel. In addition, the operator can grasp the travel status of the combine harvester 1 autonomously traveling in the field F from a travel trajectory displayed on the operation terminal 3 at a location away from the combine harvester 1. In addition, the operator can grasp the work status displayed on the operation terminal 3 at a location away from the combine harvester 1.

The storage unit 32 is a non-volatile storage unit such as a hard disk drive (HDD), a solid state drive (SSD), or a flash memory that stores various types of information. The storage unit 32 stores a control program for causing the operation control unit 31 to execute predetermined processing. For example, the control program is non-temporarily recorded in a computer-readable recording medium such as a flash ROM, an EEPROM, a CD, or a DVD, and is read by a predetermined reading device (not shown) included in the operation terminal 3 and stored in the storage unit 32. Note that the control program may be downloaded from a server (not shown) to the operation terminal 3 via the communication network N1 and stored in the storage unit 32. In addition, the storage unit 32 may store work information transmitted from the combine harvester 1. Note that the control program includes control programs corresponding to the first to fourth configurations, respectively.

In addition, a dedicated application for causing the combine harvester 1 to autonomously travel is installed in the storage unit 32. The operation control unit 31 activates the dedicated application to perform a process of setting various types of setting information related to the combine harvester 1, instructs the combine harvester 1 to autonomously travel, and the like.

The operation control unit 31 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the operation control unit 31 controls the operation terminal 3 by executing, with the CPU, various control programs stored in advance in the ROM or the storage unit 32.

As shown in Fig. 1, the operation control unit 31 includes various processing units such as a setting processing unit 311, a generation processing unit 312, and an output processing unit 313. Note that the operation control unit 31 functions as the various processing units by executing, with the CPU, various types of processing according to a control program. In addition, some or all of the processing units may include an electronic circuit. Note that the control program may be a program for causing a plurality of processors to function as the processing unit.

The setting processing unit 311 sets various types of setting information for the combine harvester 1 to perform autonomous travel. Specifically, the setting processing unit 311 sets field information related to the field F. The field information includes, for example, a shape, a size, and position information (such as coordinates) of the outermost periphery of the field, measurement point data constituting the outermost periphery of the field, a shape, a size, and position information (such as coordinates) of a work area in the field where work is performed in the field F, and the like. In addition, the field information includes an address of the field F, a registration name and a registration date of the field information, a registration name and a registration date of the work area in the field, and the like. The setting processing unit 311 receives registration operation of the field information performed by the operator and sets the field information.

In addition, the setting processing unit 311 sets a traveling speed (vehicle speed) of the combine harvester 1. For example, the operator can set a straight-traveling vehicle speed, a turning vehicle speed, and a reverse vehicle speed during work and during non-work on the setting screen.

In addition to the information described above, the setting processing unit 311 sets well-known information such as a type (the maximum number of rows to be reaped), a vehicle width, and a vehicle length of the combine harvester 1.

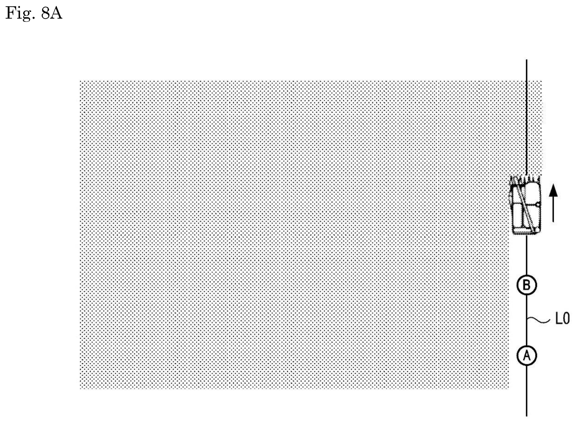

The generation processing unit 312 generates an autonomous travel route for the combine harvester 1 to perform predetermined work on a work target in the field F. Specifically, the generation processing unit 312 generates the target route R (the outermost peripheral route Ra and the inner peripheral route Rb) including a work route and a turning route. For example, the generation processing unit 312 generates the outermost peripheral route Ra in accordance with the registration operation during the manual travel by the operator. For example, when the operator performs operation to register two reference points (a point A and a point B shown in Fig. 8A) when the combine harvester 1 is caused to travel straight in the outermost peripheral area F0 of the field F, the generation processing unit 312 sets a straight line (a reference line L0) passing through the two reference points as the outermost peripheral route Ra. The generation processing unit 312 sets the outermost peripheral route Ra corresponding to the respective sides of the outer periphery of the field F. A method for generating the outermost peripheral route Ra is not limited thereto, and the generation processing unit 312 may generate a route parallel to outline sides of the field F as the outermost peripheral route Ra in a case where a shape of the field F has already been registered, or may create the outermost peripheral route Ra based on a vehicle direction when the operator has performed predetermined operation.

Note that, in a case where the shape of the field F is unregistered, the setting processing unit 311 may register the shape and size of the field F based on a travel trajectory (measurement point data) acquired while the operator causes the combine harvester 1 to perform manual travel and reaping work. In addition, the setting processing unit 311 may register the shape and size of the field F based on a travel trajectory acquired while the operator causes the combine harvester 1 to perform the manual travel and the reaping work along the outermost peripheral route Ra.

In addition, the operator selects a route pattern, a turning type, and the like on a setting screen (not shown). The route patterns include "round reaping" in which circling of a stroke along an inner periphery of the inner peripheral area F1 is repeated while shifting the circling toward the center in a rectangular spiral pattern, and "reciprocating reaping" in which reciprocating travel is performed for a plurality of strokes, and the operator selects any one of the route patterns. The turning type includes a "small turn" having a small turning radius is small, a "large turn (soft)" in having a large turning radius, and a "standard" therebetween, and the operator selects any one of the turning types. In addition, the operator can correct the turning radius on the setting screen. In addition, the operator selects whether or not to perform the corner reaping work of the field F on the setting screen.

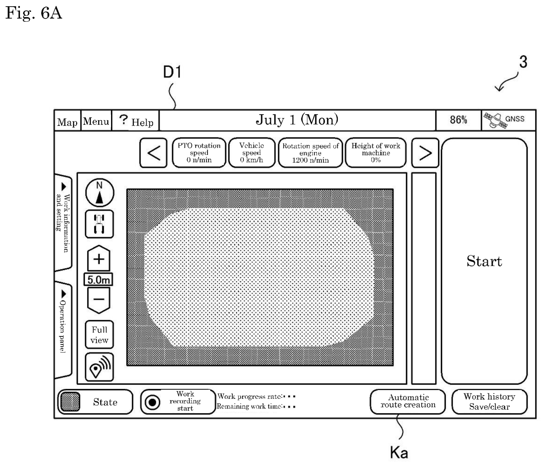

The generation processing unit 312 generates the inner peripheral route Rb (the autonomous travel route) from the start position S to the end position G based on information such as the field information, the route pattern, the turning type, the turning radius, and the presence or absence of the corner reaping work. For example, when the operator presses a route generation button Ka ("automatic route creation") on an operation screen D1 (see Fig. 6A) at the time when the reaping work in the outermost peripheral area F0 has finished, the generation processing unit 312 generates the inner peripheral route Rb.

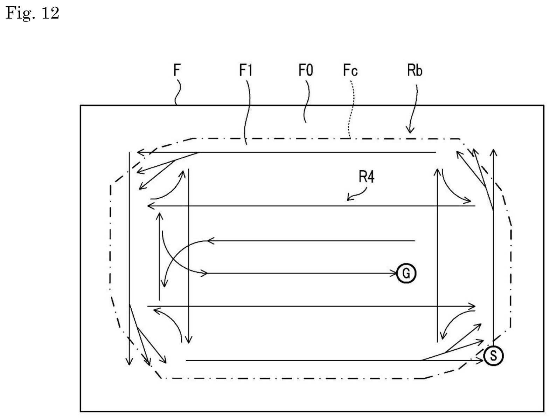

Note that the generation processing unit 312 may set a current position of the combine harvester 1 when generating the inner peripheral route Rb as the start position S, or may set a position designated by the operator on the map as the start position S. In addition, when the corner reaping work is set as "present" on the setting screen, the generation processing unit 312 generates an autonomous travel route (hereinafter, referred to as a corner reaping route) for causing the combine harvester 1 to perform the corner reaping work while autonomously traveling. The corner reaping route includes a straight route in each of the forward direction and the backward direction and a turning route. In addition, the corner reaping route may be configured to be included in the inner peripheral route Rb corresponding to one or a plurality of (for example, two to three) rounds on the outer peripheral side of the inner peripheral route Rb, and not to be included in the inner peripheral route Rb on the inner peripheral side thereof (see Fig. 12).

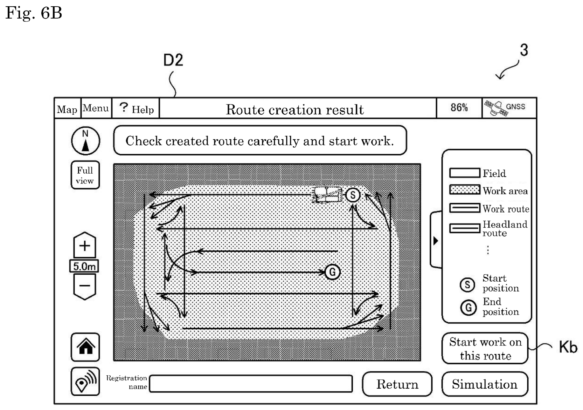

After generating the inner peripheral route Rb, the generation processing unit 312 displays the generated route information on a route creation result screen D2 (see Fig. 6B). In addition, the generation processing unit 312 registers the generated inner peripheral route Rb in association with the field F (the field registration name). A specific example of a method for generating the target route R (the second configuration) will be described later.

The output processing unit 313 outputs various types of setting information set by the setting processing unit 311 to the combine harvester 1. In addition, the output processing unit 313 outputs an autonomous travel start instruction (work start instruction) and an autonomous travel end instruction (work end instruction) to the combine harvester 1 based on the operation of the operator.

For example, when the combine harvester 1 satisfies autonomous travel start conditions, that is, when a position of the combine harvester 1 is within a predetermined distance from the start position S, a direction of the combine harvester 1 is within a predetermined angle with respect to a direction of a work route, and other autonomous travel start conditions are also satisfied, the autonomous travel is permitted. When the autonomous travel is permitted, the operator can perform autonomous travel start instruction operation on the operation terminal 3. When the operation control unit 31 receives the autonomous travel start instruction operation from the operator, the output processing unit 313 outputs the autonomous travel start instruction to the combine harvester 1. For example, the operator presses an autonomous travel start operation button Kb on the route creation result screen D2 (see Fig. 6B) or the start button on the operation screen D1 (see Fig. 6A) to start the autonomous travel.

When acquiring the autonomous travel start instruction from the operation terminal 3, the vehicle control device 11 of the combine harvester 1 causes the combine harvester 1 to start autonomous travel and reaping work, and to execute autonomous travel and reaping work along the inner peripheral route Rb from the start position S to the end position G. In addition, when the operation control unit 31 receives autonomous travel stop instruction operation from the operator, the output processing unit 313 outputs an autonomous travel stop instruction to the combine harvester 1. As a result, the vehicle control device 11 acquires the autonomous travel stop instruction from the operation terminal 3. When acquiring the autonomous travel stop instruction, the vehicle control device 11 stops the autonomous travel and the reaping work of the combine harvester 1.

Note that the operation terminal 3 may be able to access a website (agricultural support site) of an agricultural support service provided by a server (not shown) via the communication network N1. In this case, the operation terminal 3 can function as an operation terminal of the server, by the operation control unit 31 executing a browser program. Then, the server includes the above-described individual processing units and executes the individual processes.

### [Combine harvester 1]

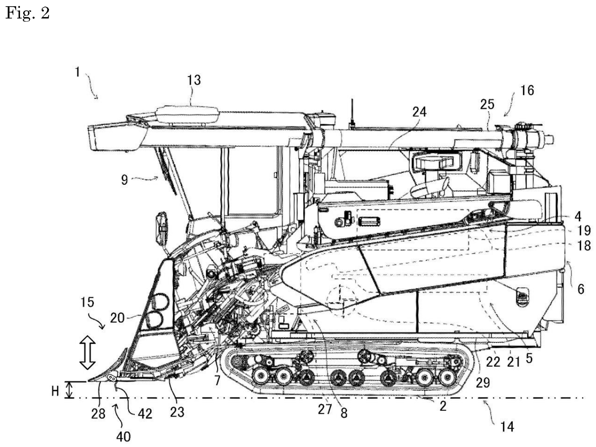

Fig. 2 is an external view of the combine harvester 1 as viewed from the side. As shown in Figs. 1 and 2, the combine harvester 1 includes a threshing unit 4, a sorting unit 5, a waste straw processing unit 6, a power unit 8, a steering unit 9, a vehicle control device 11, a storage unit 12, a positioning unit 13, a traveling unit 14, a reaping unit 15 (an example of the work machine of the present invention), a storing unit 16, a communication unit 17, and the like. While the combine harvester 1 travels by the traveling unit 14, the threshing unit 4 threshes grain culms reaped by the reaping unit 15, and the sorting unit 5 sorts and stores grains in the storing unit 16. The combine harvester 1 causes the waste straw processing unit 6 to process waste straws after the threshing. The combine harvester 1 drives the traveling unit 14, the reaping unit 15, the storing unit 16, the threshing unit 4, the sorting unit 5, and the waste straw processing unit 6 by power supplied from the power unit 8.

The traveling unit 14 is provided below a machine body frame 29, and includes a pair of left and right crawler-type traveling devices 2 and a transmission (not shown). The traveling unit 14 rotates crawlers of the crawler-type traveling devices 2 by the power (for example, rotational power) transmitted from the engine 27 of the power unit 8 to cause the combine harvester 1 to travel in the front-rear direction or turn in the left-right direction. The transmission transmits the power (rotational power) of the power unit 8 to the crawler-type traveling devices 2, and can also change the rotational power.

The reaping unit 15 is provided in front of the traveling unit 14 and performs reaping work for rows within the reaping-possible row number. The reaping unit 15 includes a divider 28, a raising device 20, a cutting device 23, a conveying device 7, and a reaping height detection device 40.

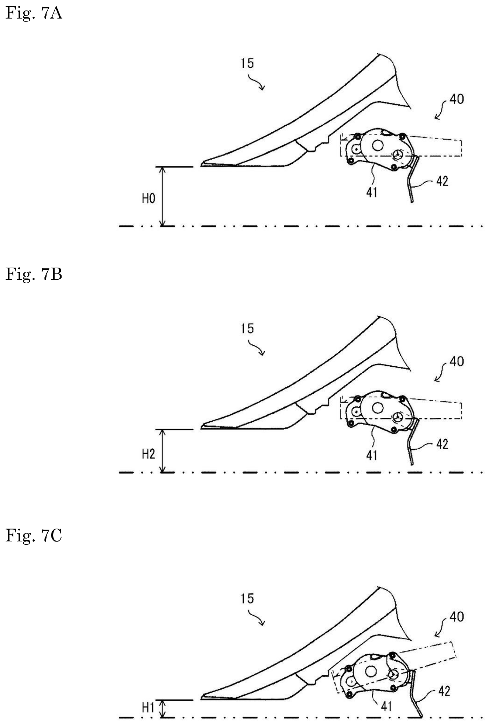

As shown in Figs. 7A to 7C, the reaping height detection device 40 includes a device main body 41, a ground-contact body 42, a detection sensor (not shown), and the like, and detects a height H (see Fig. 2) of the reaping unit 15. For example, as shown in Fig. 7C, the detection sensor detects an amount of rotation of the device main body 41 when the reaping unit 15 descends and the ground-contact body 42 comes into contact with the ground, and the reaping height detection device 40 detects the height H based on a detection signal of the detection sensor. The vehicle control device 11 (a work processing unit 112) operates a driving part (a hydraulic cylinder and the like) of the reaping unit 15 to adjust the height H so as to maintain the height H detected by the reaping height detection device 40 at a set height (work height H1). Fig. 7A shows a height (non-work height H0) of the reaping unit 15 when the combine harvester 1 is not working, and Fig. 7B shows a height (intermediate height H2) of the reaping unit 15 when the combine harvester 1 is working and at which the waste straws B1 can be prevented from being entangled. As described above, the reaping unit 15 is configured to be switchable among a height during non-work (the non-work height H0), a height during work (the work height H1), and a height therebetween (the intermediate height H2). Note that the intermediate height H2 may be a position set during non-work or a position set during work.

The divider 28 divides grain culms of the field F into for each row, and guides, to the raising device 20, grain culms for a predetermined number of rows within the reaping-possible number. The raising device 20 raises the grain culms guided by the divider 28. The cutting device 23 cuts the grain culms raised by the raising device 20. The conveying device 7 conveys the grain culms cut by the cutting device 23 to the threshing unit 4.

The threshing unit 4 is provided behind the reaping unit 15. The threshing unit 4 includes a feed chain 18 and a threshing cylinder 19. The feed chain 18 conveys the grain culms conveyed from the conveying device 7 of the reaping unit 15 for threshing, and further conveys the grain culms after threshing, that is, waste straws, to the waste straw processing unit 6. The threshing cylinder 19 threshes the grain culms being conveyed by the feed chain 18.

The sorting unit 5 is provided below the threshing unit 4. The sorting unit 5 includes a swing sorting device 21, a blower sorting device 22, a grain conveying device (not shown), and a straw debris discharging device (not shown). The swing sorting device 21 sifts threshed materials that fall from the threshing unit 4 and sorts the threshed materials into grains, straw debris, and the like. The blower sorting device 22 further sorts the threshed materials sorted by the swing sorting device 21 into grains, straw debris, and the like by blowing air. The grain conveying device conveys the grains sorted by the swing sorting device 21 and the blower sorting device 22 to the storing unit 16. The straw debris discharging device discharges the straw debris and the like sorted by the swing sorting device 21 and the blower sorting device 22 to the outside of the combine harvester 1.

The storing unit 16 is provided on the right side of the threshing unit 4. The storing unit 16 includes a storage tank (grain tank) 24 and a discharging device 25. The storage tank 24 stores the grains conveyed from the sorting unit 5. The discharging device 25 includes an auger or the like, and discharges the grains stored in the storage tank 24 to a carrier vehicle at a predetermined discharging position in the field F.

The waste straw processing unit 6 is provided behind the threshing unit 4. The waste straw processing unit 6 includes a waste straw conveying device (not shown) and a waste straw cutting device (not shown). The waste straw conveying device conveys the waste straws conveyed from the feed chain 18 of the threshing unit 4 to the waste straw cutting device. The waste straw cutting device cuts the waste straws conveyed by the waste straw conveying device and discharges the cut waste straws to the outside of the combine harvester 1. The waste straw processing unit 6 discharges the waste straws of the reaped grain culms to positions of the grain culms to be reaped. As described above, the combine harvester 1 reaps the grain culms and discharges the waste straws B1 to behind the combine harvester 1 while traveling, so that the waste straws B1 are accumulated in a row on the traveling track of the combine harvester 1 (see Fig. 4B and the like).

The power unit 8 is provided above the traveling unit 14 and in front of the storing unit 16. The power unit 8 includes the engine 27 that generates the rotational power. The power unit 8 transmits the rotational power generated by the engine 27 to the traveling unit 14, the reaping unit 15, the storing unit 16, the threshing unit 4, the sorting unit 5, and the waste straw processing unit 6.

The steering unit 9 is provided above the power unit 8. The steering unit 9 includes, around a driver's seat that is a seat on which the operator sits, a steering wheel configured to instruct the combine harvester 1 to turn the machine body thereof, a main shift lever and a sub-shift lever, which are configured to instruct the combine harvester 1 to change forward travel and backward traveling speeds, and the like as operation tools for operating the travel of the combine harvester 1. The manual travel of the combine harvester 1 is performed by the traveling unit 14 that has received operation on the steering wheel, the main shift lever, and the sub-shift lever of the steering unit 9. In addition, the steering unit 9 includes a mechanism for operating the reaping work by the reaping unit 15, the threshing work by the threshing unit 4, the discharging work by the discharging device 25 of the storing unit 16, and the like.

The positioning unit 13 acquires the own vehicle position of the combine harvester 1 using a satellite positioning system such as a GPS. For example, the positioning unit 13 receives a positioning signal from a positioning satellite via a positioning antenna, and acquires position information of the positioning unit 13, that is, the own vehicle position (measurement point data) of the combine harvester 1 based on the positioning signal. The positioning unit 13 may include a quantum compass instead of the positioning antenna.

The communication unit 17 (see Fig. 1) is a communication interface for connecting the combine harvester 1 to the communication network N1 in a wired or wireless manner and executing data communication according to a predetermined communication protocol, with an external device such as the operation terminal 3 via the communication network N1.

The storage unit 12 is a non-volatile storage unit such as an HDD, an SSD, or a flash memory that stores various types of information. The storage unit 12 stores a control program for causing the vehicle control device 11 to execute predetermined processing. For example, the control program is non-temporarily recorded in a computer-readable recording medium such as a flash ROM, an EEPROM, a CD, or a DVD, and is read by a predetermined reading device (not shown) and stored in the storage unit 12. Note that the control program may be downloaded from a server (not shown) to the combine harvester 1 via the communication network N1 and stored in the storage unit 12. In addition, the storage unit 12 also stores various types of setting information acquired from the operation terminal 3. Note that the control program includes control programs corresponding to the first to fourth configurations, respectively.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the vehicle control device 11 controls the combine harvester 1 by executing, with the CPU, various control programs stored in advance in the ROM or the storage unit 12.

Specifically, as shown in Fig. 1, the vehicle control device 11 includes various processing units such as a travel processing unit 111, a work processing unit 112, and a registration processing unit 113. Note that, the vehicle control device 11 functions as the various processing units by executing various types of processing according to the control program with the CPU. In addition, some or all of the processing units may include an electronic circuit. Note that the control program may be a program for causing a plurality of processors to function as the processing unit.

The travel processing unit 111 causes the combine harvester 1 to travel along the target route R set for the field F. Specifically, when a manual travel mode is set, the travel processing unit 111 causes the combine harvester 1 to travel in accordance with the manual operation by the operator. For example, in the outermost peripheral area F0 of the field F (see Fig. 3), the travel processing unit 111 causes the combine harvester 1 to travel straight along the outermost peripheral route Ra in response to operation to switch between forward travel and backward travel, operation to switch the vehicle speed, and the like performed by the operator. In addition, the travel processing unit 111 causes the combine harvester 1 to autonomously travel along the inner peripheral route Rb (the autonomous travel route) from the start position S to the end position G in the inner peripheral area F1.

The work processing unit 112 changes a position (posture) of the reaping unit 15 based on the position of the combine harvester 1, and causes the reaping unit 15 to execute the reaping work. Specifically, the work processing unit 112 changes (for example, raises and lowers) the position (height) of the reaping unit 15 in stages between the work height and the non-work height. For example, the work processing unit 112 sets the reaping unit 15 to the work height H1 (see Fig. 7C) when the combine harvester 1 reaches a position a predetermined distance before a starting end of the work route, and sets the reaping unit 15 to the non-work height H0 (see Fig. 7A) when the combine harvester 1 passes through a terminal end of the work route. In addition, the work processing unit 112 may set the intermediate height H2 at which the waste straws B1 can be prevented from being entangled when the combine harvester 1 passes through the waste straws B1 (see Fig. 4B).

### [Corner reaping work method in outermost peripheral area F0 (First configuration)]

Next, a specific example of the corner reaping work in the outermost peripheral area F0 of the field F will be described. The combine harvester 1 performs reaping work at the corners of the field F while traveling in the outermost peripheral area F0 in accordance with the operation of the operator.

For example, as shown in Fig. 8A, first, the operator gets on the combine harvester 1 and starts straight travel (manual travel) along an outer peripheral edge (a right side in Fig. 8A) in the work area to be reaped work, and sets the reaping unit 15 to the work height H1 (see Fig. 7C) to start the reaping work. at the time when the combine harvester 1 travels straight a predetermined distance, the operator performs registration operation to register the current position (the point A) of the combine harvester 1 on the operation terminal 3. Thereafter, when the combine harvester 1 travels straight a predetermined distance from the point A, the operator performs registration operation to register the current position (the point B) of the combine harvester 1 on the operation terminal 3. When acquiring the registered points A and B, the generation processing unit 312 generates the straight line (the reference line L0) passing through the points A and B.

When the reference line L0 is generated, the combine harvester 1 is in the state of being capable of autonomously traveling. When the operator makes an autonomous travel start instruction, the combine harvester 1 starts autonomous travel in the straight direction along the reference line L0. For example, when the operator shifts the main shift lever to a forward position, the combine harvester 1 autonomously travels in the forward direction along the reference line L0 at a vehicle speed corresponding to a shift position. As a result, the reaping work along the outer peripheral edge (the right side) (a first stroke) of the work area can be executed.

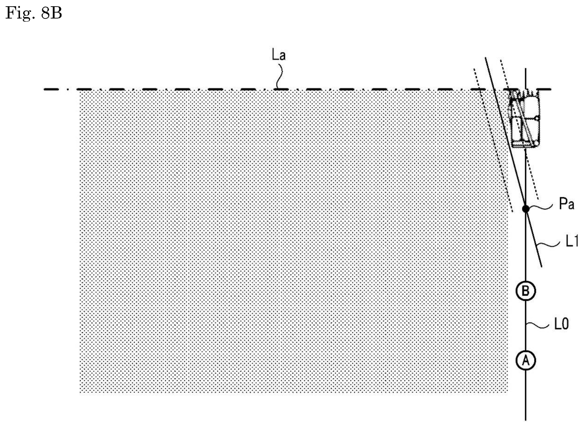

Subsequently, when the combine harvester 1 reaches an outer peripheral end (the upper side in Fig. 8A) of the work area, the operator shifts the main shift lever to a stop position (such as a neutral position) to stop the autonomous travel (stop). In addition, the operator performs operation to raise the reaping unit 15 to the non-work height H0 to stop the reaping work. When the combine harvester 1 stops the autonomous travel and the reaping work, the generation processing unit 312 generates an outline La of the work area based on the stop position of the combine harvester 1 (see Fig. 8B). For example, the generation processing unit 312 sets, as the outline La, a straight line that passes through a distal end of the combine harvester 1 (a distal end of the reaping unit 15) and is perpendicular to the reference line L0. As another embodiment, the generation processing unit 312 may set the outline La along the outer shape of the work area based on map information.

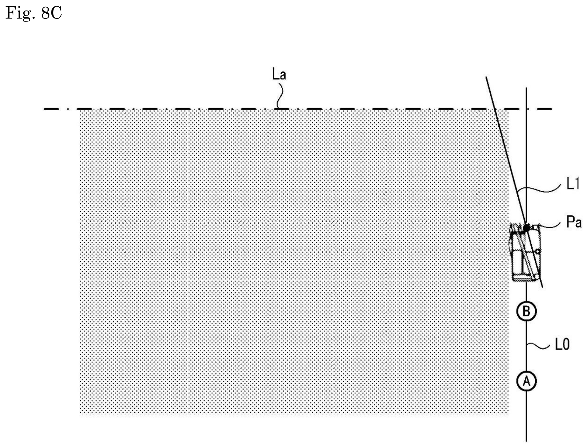

Subsequently, when the operator shifts the main shift lever to a reverse position, the combine harvester 1 starts autonomous travel in the backward direction along the reference line L0. In addition, when the operator shifts the main shift lever to the reverse position, the generation processing unit 312 generates an inclined route L1 that passes through an unworked area (unreaped area) of a second stroke adjacent to a worked area (reaped area) at the outer peripheral edge (the right side) (the first stroke), the inclined route L1 being inclined by a predetermined angle with respect to the reference line L0 (see Fig. 8B). The combine harvester 1 autonomously travels in the backward direction along the reference line L0 from a backward travel start position (the stop position), and stops the autonomous travel (stops) at an intersection point Pa between the reference line L0 and the inclined route L1 (see Fig. 8C). Note that the combine harvester 1 may stop at the intersection point Pa such that a vehicle direction matches a direction of the inclined route L1. As another embodiment, the combine harvester 1 may travel backward along the reference line L0 until passing through the intersection point Pa and then stop.

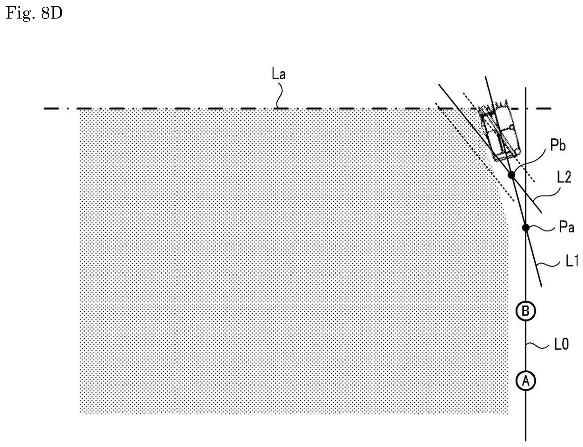

Subsequently, when the operator performs operation to lower the reaping unit 15 to the work height H1 to shift the main shift lever to the forward position, the combine harvester 1 starts autonomous travel and reaping work in the forward direction along the inclined route L1 (see Fig. 7C). The combine harvester 1 travels along the inclined route L1 and then stops the autonomous travel (stops) when reaching the outline La (see Fig. 8D). In addition, the operator performs operation to raise the reaping unit 15 to the non-work height H0 to stop the reaping work. As a result, the reaping work in an area (the second stroke) corresponding to the inclined route L1 in the work area is completed (see Fig. 8D). Note that the combine harvester 1 may emit a buzzer sound when the remaining distance to the outline La is less than a predetermined distance to notify the operator of approach to the outline La. In addition, the combine harvester 1 may automatically stop when reaching the outline La.

Subsequently, when the operator shifts the main shift lever to the reverse position, the combine harvester 1 starts autonomous travel in the backward direction along the inclined route L1. In addition, when the operator shifts the main shift lever to the reverse position, the generation processing unit 312 generates an inclined route L2 that passes through an unworked area (unreaped area) of a third stroke adjacent to the worked area (the second stroke), which corresponds to the inclined route L1, the inclined route L2 being inclined by a predetermined angle with respect to the inclined route L1 (see Fig. 8D). The combine harvester 1 autonomously travels in the backward direction from a backward travel start position (stop position) along the inclined route L1, and stops the autonomous travel (stops) at an intersection point Pb between the inclined route L1 and the inclined route L2. Note that the combine harvester 1 may stop at the intersection point Pb such that a vehicle direction matches a direction of the inclined route L2. As another embodiment, the combine harvester 1 may travel backward along the inclined route L1 until passing through the intersection point Pb and then stop.

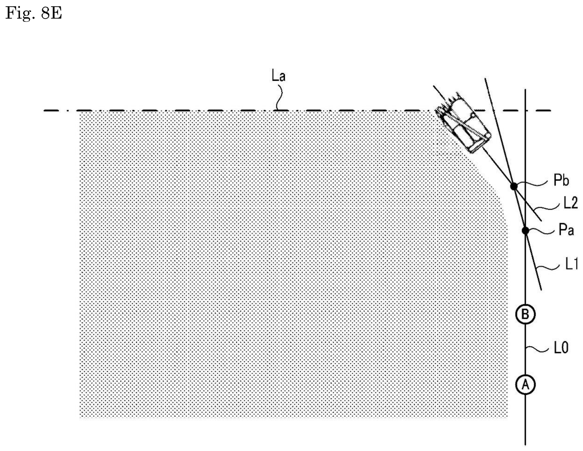

Subsequently, when the operator performs operation to lower the reaping unit 15 to the work height H1 (see Fig. 7C) and shifts the main shift lever to the forward position, the combine harvester 1 starts autonomous travel and reaping work in the forward direction along the inclined route L2. When reaching the outline La, the combine harvester 1 stops the autonomous travel (stops) (see Fig. 8E). In addition, the operator performs operation to raise the reaping unit 15 to the non-work height H0 to stop the reaping work. As a result, the reaping work in an area (the third stroke) corresponding to the inclined route L2 in the work area is completed (see Fig. 8E). Note that the combine harvester 1 may emit a buzzer sound when the remaining distance to the outline La is less than a predetermined distance to notify the operator of approach to the outline La.

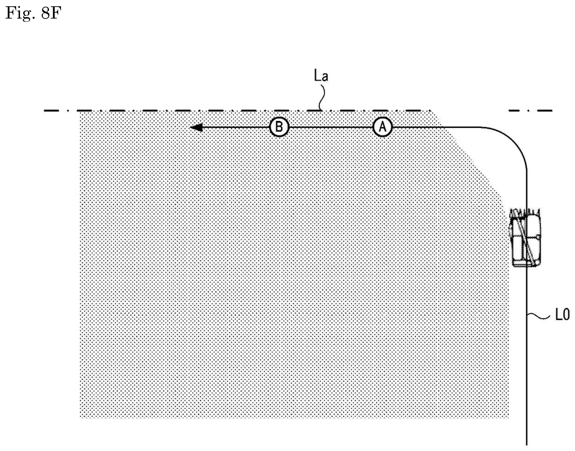

When a turning area necessary for turning when the combine harvester 1 moves to the next work route is secured at a corner (upper right corner) of the work area by the reaping work in the first stroke, the second stroke, and the third stroke, the operator ends the corner reaping work in the work area and causes the combine harvester 1 to move to the next work route. For example, when the operator shifts the main shift lever to the reverse position, the combine harvester 1 starts autonomous travel in the backward direction along the inclined route L2, the inclined route L1, and the reference line L0, and stops at a predetermined position on the reference line L0. Thereafter, the operator shifts the main shift lever to the forward position, causes the combine harvester 1 to turn in the worked area and move to the next working route by manual steering (see Fig. 8F).

When the combine harvester 1 enters the next work route, the operator starts straight travel (manual travel) along an outer peripheral edge (the upper side in Fig. 8F) in the work area and starts reaping work, and performs registration operation to register points A and B on the operation terminal 3. As a result, the reference line L0 corresponding to the next work route is generated. Thereafter, the combine harvester 1 performs the corner reaping work at a corner (upper left corner) of the work area in accordance with the above-described procedure in accordance with the operation of the operator. Similarly, the combine harvester 1 performs the corner reaping work at the lower left corner and the lower right corner of the work area in accordance with the operation of the operator.

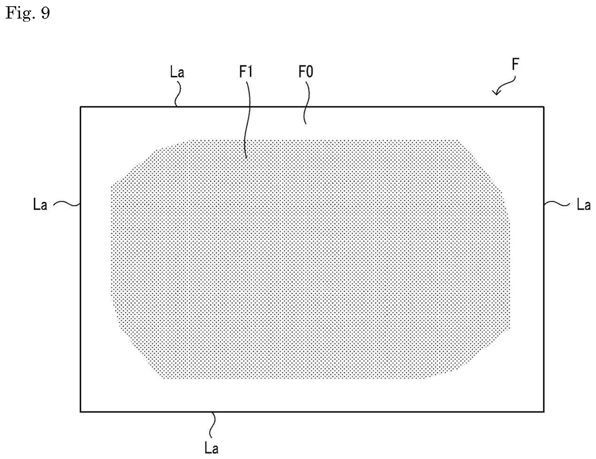

When the corner reaping work at each corner of the work area is completed, the setting processing unit 311 specifies a shape surrounded by the outline La and registers an area surrounded by the outline La as the field F (see Fig. 9). In the field F, the outermost peripheral area F0 is the worked area in which the reaping work has finished, and the inner peripheral area F1 is an unworked area in which reaping work has not finished. Note that a method for registering the field F is not limited thereto, and the setting processing unit 311 may apply, for example, a known technique (see JP-A-2022-87959 and JP-A-2023-56476) of approximating the own vehicle position of the combine harvester 1 (measurement point data or a positioning point) to a straight line and registering an area surrounded by the approximate straight line as the field F.

The travel system 10 executes the corner reaping work in the outermost peripheral area F0 as described above. Note that the corner reaping work in the outermost peripheral area F0 in a state in which the field F is not registered has been described in the above-described embodiment. In a case where the field F is registered, generation processing of the outline La is omitted. In this case, it is sufficient for the operator to cause the combine harvester 1 to autonomously travel in accordance with the outer peripheral edges (the right side, the upper side, a left side, and a lower side) of the field F and stop the autonomous travel. The reference line L0, the inclined route L1, and the inclined route L2 are included in the outermost peripheral route Ra.

In addition, in the above configuration, at the intersection point Pa (see Fig. 8C), the generation processing unit 312 sets an inclination angle of the inclined route L1 and a position of the intersection point Pa such that the vehicle body (rear end) of the combine harvester 1 does not protrude out of the work area due to a turning operation when moving to the second stroke. Similarly, at the intersection point Pb (see Fig. 8D), the generation processing unit 312 sets an inclination angle of the inclined route L2 and a position of the intersection point Pb such that the vehicle body of the combine harvester 1 does not protrude out of the work area due to a turning operation when moving to the third stroke. Note that the maximum value (maximum inclination angle) of the inclination angle may be set in advance. In this case, for example, the generation processing unit 312 may first draw an inclined straight line at the maximum inclination angle, reduce the inclination angle when the vehicle body protrudes out of the work area, and set, as the inclined route L1, the inclined straight line having the maximum angle at which the vehicle body does not protrude out of the work area. As described above, the generation processing unit 312 determines the inclination angles of the inclined routes L1 and L2 such that the rear end of the vehicle body does not protrude out of the work area.

A corner reaping work method (the first configuration) in the outermost peripheral area F0 is not limited to the above method. As another embodiment of the first configuration, the combine harvester 1 may perform reaping work while traveling (performing manual travel) in the outermost peripheral area F0 in accordance with manual steering by the operator. In addition, the setting processing unit 311 may specify a shape of the worked area based on position information of the combine harvester 1 acquired during the manual travel, and register the field F.

In addition, as another embodiment, the combine harvester 1 may perform reaping work in the outermost peripheral area F0 by autonomous travel without depending on operation (for example, shift operation on the main shift lever) by the operator.

As another embodiment, in a case where the shape of the field F is already registered, the combine harvester 1 may autonomously travel along a route parallel to the outline sides of the field F.

### [Method for generating inner peripheral route Rb (autonomous travel route) (Second configuration)]

Next, a specific example of a method for generating the autonomous travel route (the inner peripheral route Rb) for causing the combine harvester 1 to autonomously travel in the inner peripheral area F1 will be described. The travel system 10 generates the inner peripheral route Rb based on a position of an unworked area (unworked region), a position of a worked area (worked region), the outer shape of the field F (positions of outer peripheral ends of the field), and the like. In addition, the travel system 10 executes generation processing of the inner peripheral route Rb after the reaping work in the outermost peripheral area F0 has finished. As another embodiment, the travel processing unit 111 may acquire position information of the outermost peripheral area F0 and execute the generation processing of the inner peripheral route Rb before the reaping work in the outermost peripheral area F0.

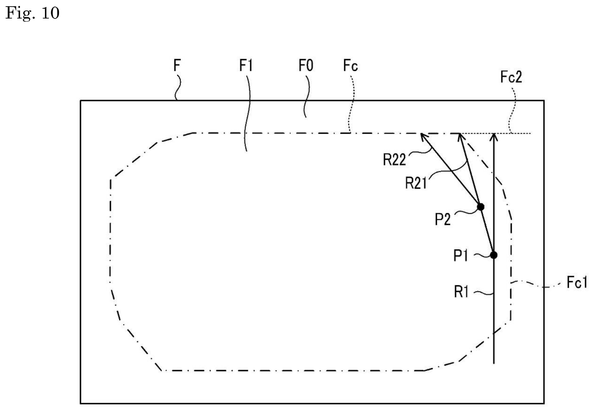

Fig. 10 shows a specific example of the inner peripheral route Rb in the field F. In Fig. 10, reference sign "Fc" indicates a boundary between a worked area and an unworked area, that is, an outermost peripheral position of the unworked area or an outermost peripheral position of the worked area. The outermost peripheral position Fc is specified by executing the travel and work in the outermost peripheral area F0 (see Figs. 8A to 9).

As shown in Fig. 10, the generation processing unit 312 of the operation terminal 3 generates a work route R1 based on an outermost peripheral position Fc1 of the unworked area or an outer edge portion (the right side) of the field F. Specifically, the generation processing unit 312 generates the work route R1 of a linear route along the outermost peripheral position Fc1 at a position where grain culms at the outermost peripheral position Fc1 can be reaped. In addition, the generation processing unit 312 generates the work route R1 inward by one stroke (work width) of the work route (see Fig. 8A), which corresponds to the reference line L0, in parallel to the reference line L0 (see Figs. 8A to 8F) of the outermost peripheral route Ra or the outer edge portion (the right side) (see Fig. 9) of the field F. In addition, the generation processing unit 312 generates the work route R1 having a terminal end on an extension line Fc2 of the outermost peripheral position Fc.

In addition, the generation processing unit 312 generates a first inclined route R21 having a predetermined inclination angle with respect to the work route R1 inside the work route R1 based on the work route R1. Specifically, the generation processing unit 312 generates the first inclined route R21 having a terminal end at a position shifted inward by one stroke (work width) from the terminal end of the work route R1. In addition, the generation processing unit 312 determines the inclination angle of the first inclined route R21 such that the rear end of the vehicle body of the combine harvester 1 does not protrude out of the field F. The generation processing unit 312 sets an intersection point P1 between the first inclined route R21 having the determined inclination angle and the work route R1 as a starting end of the first inclined route R21. Note that the intersection point P1 may be set at a position 12 m (backward travel distance) from the outline La.

As another embodiment, the generation processing unit 312 may generate the first inclined route R21 based on an angle set by the operator within a range up to the maximum inclination angle. In addition, a worked area where work has finished and an estimated work area where work is to be performed along the outermost peripheral route Ra and a corner reaping route may be displayed on the operation terminal 3 to receive operation to set the inclination angle from the operator. This makes it possible to generate the corner reaping route intended by the operator. In addition, the generation processing unit 312 may automatically set the angle (inclination angle) of an inclined route along an unworked area based on the unworked area.

In addition, the generation processing unit 312 may set the starting end of the first inclined route R21 at a position a predetermined distance, set in advance, before the terminal end of the work route R1, and determine the inclination angle of the first inclined route R21. In addition, the operator may be allowed to set the predetermined distance. In addition, the predetermined distance may be a distance by which the combine harvester 1 travels backward after finishing the work on the work route R1. That is, the generation processing unit 312 may determine the inclination angle of the first inclined route R21 based on the work width corresponding to the work route R1, the work width (for one stroke) corresponding to the first inclined route R21, and the distance by which the combine harvester 1 travels backward after finishing the work on the work route R1.

When the first inclined route R21 is generated, the generation processing unit 312 determines whether or not a turning area necessary for the combine harvester 1 to turn is secured at a corner of the inner peripheral area F1, generates a second inclined route R22 inclined with respect to the first inclined route R21 inside the first inclined route R21 when determining that the turning area is not secured.

Specifically, the generation processing unit 312 generates the second inclined route R22 having a terminal end at a position shifted inward by one stroke (work width) from the terminal end of the first inclined route R21. In addition, the generation processing unit 312 determines the inclination angle of the second inclined route R22 such that the rear end of the vehicle body of the combine harvester 1 does not protrude out of the field F. The generation processing unit 312 sets an intersection point P2 between the second inclined route R22 having the determined inclination angle and the first inclined route R21 as a starting end of the second inclined route R22. As described above, the generation processing unit 312 generates the first inclined route R21, which has a first inclination angle with respect to the work route R1, inside the work route R1, and generates the second inclined route R22, which has a second inclination angle larger than the first inclination angle with respect to the work route R1, inside the first inclined route R21. As another embodiment, the generation processing unit 312 may generate the second inclined route R22 having the same inclination angle as the first inclination angle inside the first inclined route R21.

As another embodiment, the generation processing unit 312 may set the intersection point P1 as the starting end of the second inclined route R22.

The generation processing unit 312 generates a work route having an inclination angle on the inner side of a work route of one stroke before the current stroke until the turning area necessary for moving from the work route R1 to the next work route (the work route along the upper side of the field F shown in Fig. 10) is secured. The work route R1, the first inclined route R21, and the second inclined route R22 are included in the corner reaping route and the inner peripheral route Rb. The work route R1 is an example of a first route of the present invention, and the first inclined route R21 and the second inclined route R22 are examples of a second route of the present invention. Note that the generation processing unit 312 may set the terminal ends of the work route R1, the first inclined route R21, and the second inclined route R22 on the outline side of the field F (the upper side of the field F shown in Fig. 10).

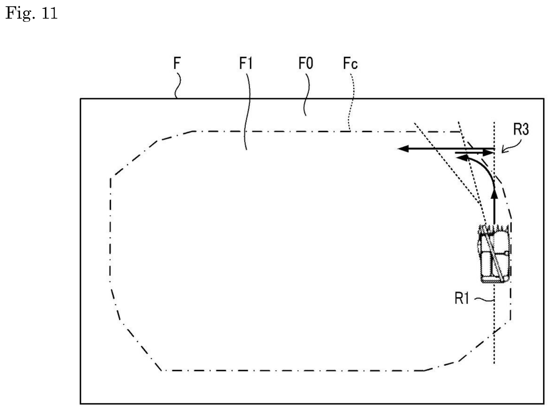

After generating the work routes for the corner reaping work, the generation processing unit 312 generates a movement route R3 for moving to the next work route. For example, as shown in Fig. 11, the generation processing unit 312 generates the movement route R3 including a turning route and a straight route connecting the work route R1 and the next work route at the corner of the field F. Specifically, in specifications for generating a work route for each side of an unworked area, even if a work route along a short side formed between the upper side and the right side of the unworked area is generated by traveling along the corner reaping route, the generation processing unit 312 generates a movement route R3 for moving to a work route corresponding to the upper side without traveling along the work route corresponding to the short side when the work route corresponding to the short side is less than a predetermined length. In addition, the generation processing unit 312 may generate the movement route R3 for causing the combine harvester 1 to move forward along the second inclined route R22, travel backward while turning right, and move to the work route corresponding to the upper side. The movement route R3 is included in the inner peripheral route Rb.

The generation processing unit 312 generates the corner reaping route and the movement route R3 at each of the corners of the field F. In addition, in a case where a turning area of the combine harvester 1 is not secured at any corner by the corner reaping route corresponding to circling for the first round, the generation processing unit 312 generates a corner reaping route corresponding to circling for the second round. The generation processing unit 312 generates corner reaping routes for a plurality of rounds until the turning areas are secured at the corners. In addition, the generation processing unit 312 may determine whether or not it is necessary to generate a corner reaping route corresponding to circling for the second round at the time when circling for the first round has been executed, or may determine any number of rounds for which corner reaping routes need to be generated before the autonomous travel on the inner peripheral route Rb is started.

When the turning areas are secured at the respective corners of the field F by the corner reaping routes, the generation processing unit 312 generates a work route R4 (see Fig. 12) including no corner reaping route inside. The work route R4 does not include any corner reaping route but includes a straight work route and a movement route including a turning route. The work route R4 is included in the inner peripheral route Rb. Note that a turning method on the turning route included in the work route R4 may be set in advance by the operator.

As described above, when the reaping work in the outermost peripheral area F0 is finished (see Fig. 9), the generation processing unit 312 executes the generation processing of the inner peripheral route Rb including the corner reaping routes and the work route R4 on the inner side of the corner reaping routes (see Figs. 10 to 12).

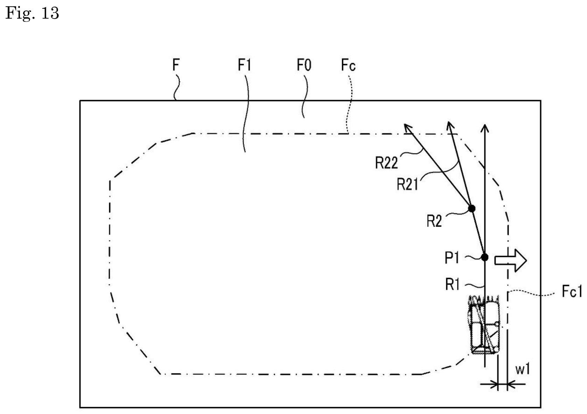

Here, the generation processing unit 312 may execute a process of correcting a position of a corner reaping route. For example, as shown in Fig. 13, in a case where a gap w1 is generated between a work end (a right end of the reaping unit 15) of the combine harvester 1 and the outermost peripheral position Fc1 when the work route R1 is generated, the generation processing unit 312 shifts the work route R1 to the right side such that the gap w1 is eliminated. For example, the generation processing unit 312 may generate the work route R1 based on the outer edge portion of the field F, and shift the work route R1 based on a position of an unworked area. Note that the generation processing unit 312 may shift the work route R1 such that a portion on right side of the work width of the work route R1 and a portion on the left side of the work width of the outermost peripheral route Ra overlap by a predetermined amount.

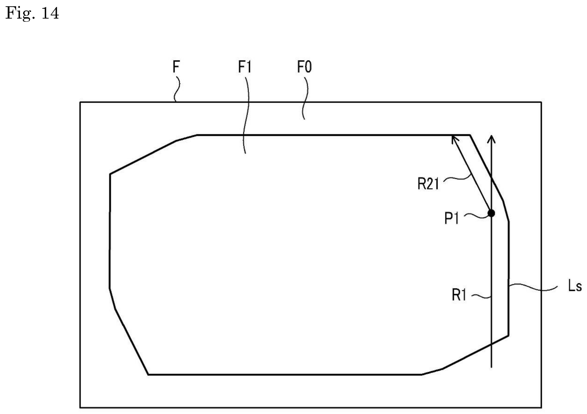

As another embodiment, as shown in Fig. 14, the generation processing unit 312 may set a work target line Ls (recommended reaping line) in the outermost peripheral area F0, and determine an inclination angle of a corner reaping route based on the work target line Ls. The work target line Ls represents a target position (mark) when the operator causes the combine harvester 1 to perform manual travel and reaping work in the outermost peripheral area F0. For example, the work target line Ls is displayed on the operation terminal 3, and the operator causes the combine harvester 1 to travel and perform the reaping work in the outermost peripheral area F0 while checking the work target line Ls. As a result, the reaping work can be reliably performed up to the work target line Ls. The work target line Ls is set, for example, at a position whose distance from the end of the field F is narrower than the work width and at a position that enables the combine harvester 1 to turn at the corner.

For example, the generation processing unit 312 generates the work route R1 parallel to the work target line Ls and the first inclined route R21. As the travel processing unit 111 causes the combine harvester 1 to autonomously travel along the inner peripheral route Rb generated based on the work target lines Ls, it is possible to prevent a reaping miss at a boundary portion between the outermost peripheral area F0 and the inner peripheral area F1 and to reliably secure the turning areas. Note that the travel processing unit 111 may permit the autonomous travel on the inner peripheral route Rb on condition that reaping work up to the work target line Ls has finished.

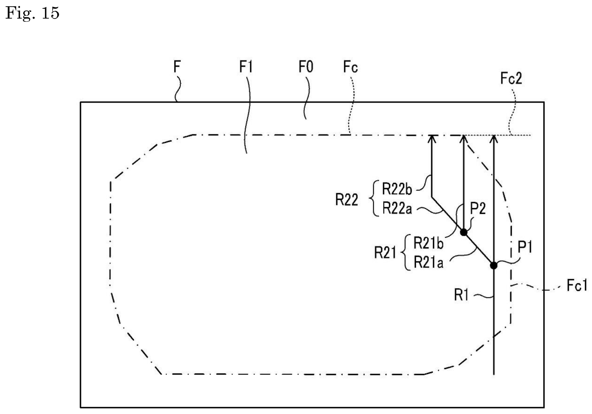

As another embodiment, the generation processing unit 312 may generate work routes for performing reaping work (parallel reaping) with parallel travel at the corner. For example, as shown in Fig. 15, the generation processing unit 312 generates the first inclined route R21 and the second inclined route R22 partially parallel to the work route R1. Specifically, the generation processing unit 312 generates the first inclined route R21 including an inclined route R21a, which has a predetermined inclination angle with respect to the work route R1 and passes through the intersection point P1, and a parallel route R21b connected to the inclined route R21a and parallel to the work route R1. In addition, the generation processing unit 312 generates the second inclined route R22 including an inclined route R22a, which has a predetermined inclination angle with respect to the work route R1 and passes through the intersection point P2 between the inclined route R21a and the parallel route R21b, and a parallel route R22b connected to the inclined route R22a and parallel to the work route R1. According to the configuration in which the corners are worked by the parallel reaping, a distance for a turning area (for example, a distance up to the parallel route R22b) can be provided, so that corner reaping work for the subsequent rounds can be easily omitted.

As described above, in the present invention, the entire first inclined route R21 may be inclined with respect to the work route R1 (see Fig. 10), or a part thereof may be inclined with respect to the work route R1 (see Fig. 15). Similarly, the entire second inclined route R22 may be inclined with respect to the work route R1 (see Fig. 10), or a part thereof may be inclined with respect to the work route R1 (see Fig. 15). In the configuration shown in Fig. 15, the generation processing unit 312 generates the inclined route R22a having the same inclination angle as the inclination angle of the inclined route R21a inside the first inclined route R21.

### [Generation processing of inner peripheral route Rb (Second configuration)]

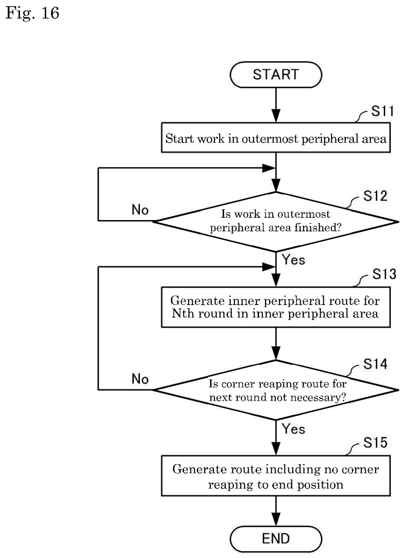

Hereinafter, an example of the generation processing of the inner peripheral route Rb (route generation processing) executed by the travel system 10 will be described with reference to Fig. 16.

Note that the present invention can be regarded as an invention of a route generation method for executing one or a plurality of steps included in the route generation processing. In addition, one or a plurality of steps included in the route generation processing described here may be appropriately omitted. In addition, an execution order of each step in the route generation processing may be different within a range in which similar operational effects are produced. Furthermore, here, a case where the vehicle control device 11 and the operation control unit 31 execute each step in the route generation processing will be described as an example, but a route generation method in which one or a plurality of processors execute each step in the route generation processing in a dispersed manner is also considered as another embodiment.

### <Step S11>

In step S11, the vehicle control device 11 starts reaping work in the outermost peripheral area F0 of a work area (the field F) in accordance with operation of the operator. For example, as shown in Fig. 8A, the operator gets on the combine harvester 1, starts straight travel (manual travel) along an outer peripheral edge (the right side in Fig. 8A) in the work area, and starts the reaping work. In addition, the operator performs registration operation to register points A and B on the operation terminal 3. The operation control unit 31 generates the reference line L0 passing through the points A and B. As a result, the vehicle control device 11 causes the combine harvester 1 to perform the reaping work while autonomously traveling along the reference line L0.

In addition, the vehicle control device 11 causes the combine harvester 1 to perform reaping work (corner reaping work) while traveling in accordance with the operation of the operator along the inclined routes L1 and L2 (see Figs. 8D and 8E) having predetermined inclination angles at a corner of the outermost peripheral area F0.

### <Step S12>

In step S12, the vehicle control device 11 determines whether or not the reaping work in the outermost peripheral area F0 has finished. For example, when the combine harvester 1 makes one round in the outermost peripheral area F0 by performing the corner reaping work in each of the corners of the outermost peripheral area F0 along the inclined routes, the vehicle control device 11 determines that the reaping work in the outermost peripheral area F0 has finished. Note that, when the combine harvester 1 makes one round in the work area, the operation control unit 31 registers the outer shape of the field F (see Fig. 9). When the reaping work in the outermost peripheral area F0 has finished (S12: Yes), the processing proceeds to step S13. The vehicle control device 11 continues the reaping work until the reaping work in the outermost peripheral area F0 has finished (S12: No).

### <Step S13>

In step S13, the operation control unit 31 generates an autonomous travel route (the inner peripheral route Rb) of the inner peripheral area F1. Specifically, the operation control unit 31 generates corner reaping routes of the first round of the inner peripheral area F1 based on the outermost peripheral position of an unworked area or outer edge portions of the field F.

For example, as shown in Fig. 10, the operation control unit 31 generates the work route R1 of a linear route along the outermost peripheral position Fc1 at a position where grain culms at the outermost peripheral position Fc1 can be reaped based on the outermost peripheral position Fc1 of the unworked area. In addition, the generation processing unit 312 generates the work route R1 inward by one stroke (work width) of the work route (see Fig. 8A), which corresponds to the reference line L0, in parallel to the reference line L0 (see Figs. 8A to 8F) of the outermost peripheral route Ra or the outer edge portion (the right side) (see Fig. 9) of the field F.

In addition, the operation control unit 31 generates the first inclined route R21 having the predetermined inclination angle with respect to the work route R1 inside the work route R1 based on the work route R1. For example, the operation control unit 31 determines the inclination angle of the first inclined route R21 such that the rear end of the vehicle body of the combine harvester 1 does not protrude out of the field F.

When the first inclined route R21 is generated, the operation control unit 31 determines whether or not a turning area necessary for the combine harvester 1 to turn is secured at the corner of the inner peripheral area F1, and generates the second inclined route R22 inclined with respect to the first inclined route R21 inside the first inclined route R21 when determining that the turning area is not secured. The operation control unit 31 determines the inclination angle of the second inclined route R22 such that the rear end of the vehicle body of the combine harvester 1 does not protrude out of the field F.

As described above, the operation control unit 31 generates the corner reaping route for each of the corners of the inner peripheral area F1, and generates the autonomous travel route for the first round.

### <Step S14>

In step S14, the operation control unit 31 determines whether or not it is necessary to generate a corner reaping route for the inner peripheral route Rb for the next round (for example, the second round). For example, in a case where the turning area necessary for the combine harvester 1 to turn is secured at the corner by the inner peripheral route Rb of the first round, the operation control unit 31 determines that it is not necessary to generate the corner reaping route in the inner peripheral route Rb of the second round. On the other hand, in a case where the turning area necessary for the combine harvester 1 to turn is not secured at the corner by the inner peripheral route Rb of the first round, the operation control unit 31 determines that it is necessary to generate the corner reaping route in the inner peripheral route Rb of the second round. When the operation control unit 31 determines that it is not necessary to generate a corner reaping route for the inner peripheral route Rb of the next round (S14: Yes), the processing proceeds to step S15.

On the other hand, when the operation control unit 31 determines that it is necessary to generate a corner reaping route for the inner peripheral route Rb of the next round (S14: No), the processing proceeds to step S13. Returning to step S13, the operation control unit 31 generates a corner reaping route for each corner of the next round (for example, the second round) in the inner peripheral area F1, and generates an autonomous travel route for the second round. The operation control unit 31 generates the inner peripheral route Rb including the corner reaping routes until the turning areas necessary for the combine harvester 1 to turn are secured at the corners.

### <Step S15>

In step S15, the operation control unit 31 generates an autonomous travel route including no corner reaping route up to the end position G. For example, as shown in Fig. 12, the operation control unit 31 generates the work route R4 including the straight work route and the movement route (turning route) without including any corner reaping route.

As described above, the operation control unit 31 generates the work routes (the autonomous travel routes) in the outermost peripheral area F0 and the inner peripheral area F1. Note that the operation control unit 31 may generate the inner peripheral route Rb for the next round each time autonomous travel and reaping work for one round end in the inner peripheral area F1, or may generate the inner peripheral route Rb for all the rounds of the inner peripheral area F1 at the time when the reaping work in the outermost peripheral area F0 has finished (before the autonomous travel in the inner peripheral area F1 is started).

As described above, the travel system 10 according to the second configuration has a configuration to generate a route for the combine harvester 1 to perform predetermined work (reaping work) on a work target (for example, grain culms) at the corners of the field F. In addition, the travel system 10 has a configuration to generate a first work route based on an outermost peripheral position of the unworked area in the field F or an outer edge portion of the field F, and generate a second work route on the inner side of the first work route based on the first work route, at least a part of the second work route having a predetermined inclination angle with respect to the first work route. Note that the first work route and the second work route correspond to the autonomous travel route generated in an inner area (the inner peripheral area F1) inside the outermost peripheral area F0 of the field F. In addition, work on the inner area is performed after work on the outermost peripheral area F0 has finished.

Specifically, the travel system 10 generates the first work route based on the outer edge portion of the field F specified when the outermost peripheral area F0 is worked. In addition, the travel system 10 determines the inclination angle of the second work route such that the vehicle body of the combine harvester 1 does not protrude out of the field when the combine harvester 1 moves from the first work route to the second work route.

According to the above configuration, for example, it is possible to generate an optimal corner reaping route for securing a turning area necessary for the combine harvester 1 to turn at each corner of the field F. The combine harvester 1 can autonomously travel along the corner reaping route. For example, when the operator performs reaping work by manual travel only in the outermost peripheral area F0 of the field F, the inner peripheral route Rb for autonomous travel including the route (the corner reaping route) of the corners can be generated for the inner peripheral area F1 inside the outermost peripheral area F0. Therefore, the burden on the operator can be reduced, and the work efficiency of work by the combine harvester 1 can be improved.

### [Control method for autonomous travel of combine harvester 1 (Third configuration)]

A specific example of a control method (the third configuration) for causing the combine harvester 1 to autonomously travel along the autonomous travel route (the inner peripheral route Rb) generated in the inner peripheral area F1 in the second configuration will be described. The travel system 10 has a configuration to determine whether or not to execute the autonomous travel along the inner peripheral route Rb based on work region information indicating whether a work target region (work target position) of reaping work is an unworked region where reaping work has not finished or a worked region where reaping work has finished.

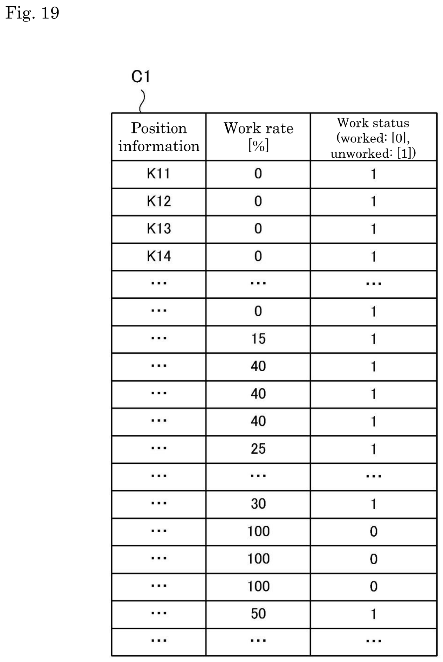

Specifically, the registration processing unit 113 of the vehicle control device 11 registers work region information C1 (see Fig. 19) based on a travel trajectory of the combine harvester 1, and the travel processing unit 111 determines, for each work route, whether or not to execute autonomous travel based on the registered work region information C1.

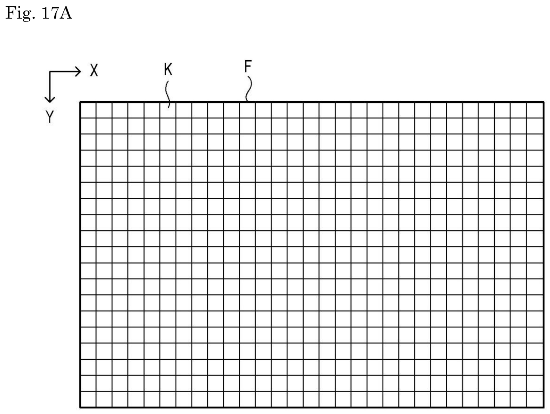

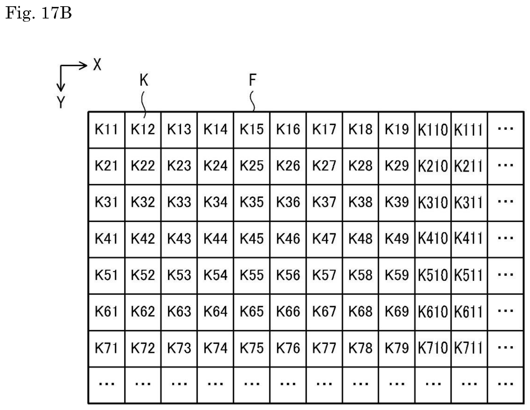

For example, the vehicle control device 11 divides the entire area of the field F into a lattice shape (mesh shape). Specifically, as shown in Fig. 17A, the vehicle control device 11 divides the field F into divisions K each having predetermined widths (for example, 10 cm × 10 cm) in an X direction and a Y direction on an XY plane corresponding to the field F. Fig. 17B shows identification information (position information) of each of the divisions K.

The registration processing unit 113 determines a work status (worked or unworked) of each of the divisions K based on a position where the combine harvester 1 has traveled while performing reaping work, and registers the work status in the work region information C1. For example, the registration processing unit 113 detects a position where the reaping unit 15 has passed in a state in which the reaping unit 15 is set to the work height H1, and determines the work status of each of the divisions K.

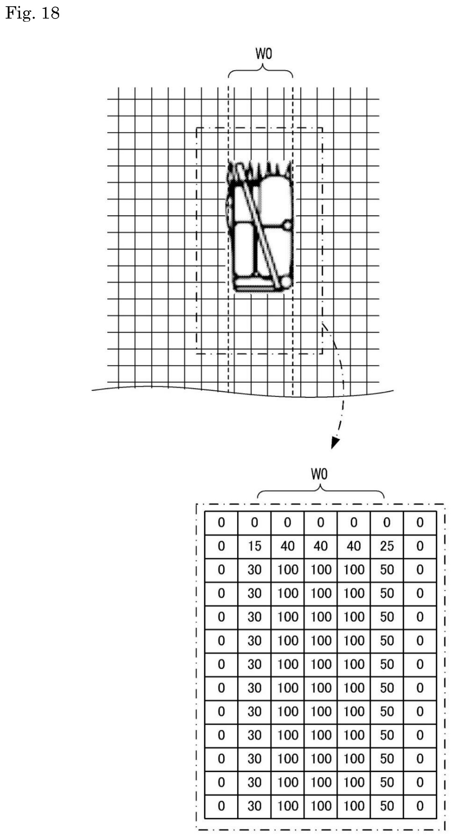

Fig. 18 shows an example of a work status determination method. For example, the combine harvester 1 travels while performing reaping work in a range of a work width WO. The registration processing unit 113 calculates a work rate for each of the divisions K. The work rate indicates a proportion of an area where reaping work has been performed relative to the entire area of one division K. The work rate is 100% when the entire area of the division K is included in the range of the work width WO, the work rate is 50% when a half area of the division K is included in the range of the work width WO, and the work rate is 30% when a 30% area of the division K is included in the range of the work width WO.

In the example shown in Fig. 18, since only a part (for example, 30%) of the division K is included in the work width WO at a left end of the combine harvester 1, the registration processing unit 113 calculates the work rate of the division K as 30%. In addition, since only a part (for example, 50%) of the division K is included in the work width WO at a right end of the combine harvester 1, the registration processing unit 113 calculates the work rate of the division K as 50%. In addition, since only a part of each of a plurality of the divisions K is included in the work width WO at a front end of the combine harvester 1, the registration processing unit 113 calculates the work rates of the divisions K as shown in Fig. 18. As described above, the registration processing unit 113 calculates, as the work rate, the proportion of the area overlapping a passing position of the work width WO (the reaping unit 15) of the combine harvester 1 in each of the divisions K.

The registration processing unit 113 determines the division K as "worked" when the calculated work rate is a threshold or more, and determines the division K as "unworked" when the calculated work rate is less than the threshold. The registration processing unit 113 registers the determination result in the work region information C1.

Fig. 19 shows an example of the work region information C1. As shown in Fig. 19, in the work region information C1, the position information, the work rate, and the work status are registered in association with each of the divisions K. The position information is information (coordinate information) indicating a location of the division K (see Fig. 17B). The work rate is a proportion of an area where reaping work has been performed in the entire area of the division K. The work status is information indicating whether the division K is worked or unworked. For example, when the threshold is set to 90%, information of "worked" ("0") is registered in a division in which the work rate is 90% or more, and information of "unworked" ("1") is registered in a division in which the work rate is less than 90%.

While the combine harvester 1 travels, the registration processing unit 113 registers the work status (worked or unworked) of each of the divisions K in the work region information C1 and updates the registered work status.

As another embodiment, the registration processing unit 113 may determine the work status (worked or unworked) of each of the divisions K based on an image captured by a camera (not shown) provided in the combine harvester 1, and register the determined work status in the work region information C1.

As another embodiment, the above-described determination processing of the work status of each of the divisions K and the registration processing in the work region information C1 may be applied to a transplanter. For example, in the transplanter, row-stop control for stopping any planting work unit among a plurality of planting work units may be performed based on the registered information of "worked" ("0") and "unworked" ("1") of each of the divisions K.

The travel processing unit 111 determines whether or not to cause the combine harvester 1 to execute the autonomous travel along the inner peripheral route Rb based on the work region information C1. In addition, the travel processing unit 111 determines whether or not to cause the combine harvester 1 to execute autonomous travel for each work route based on the work region information C1.

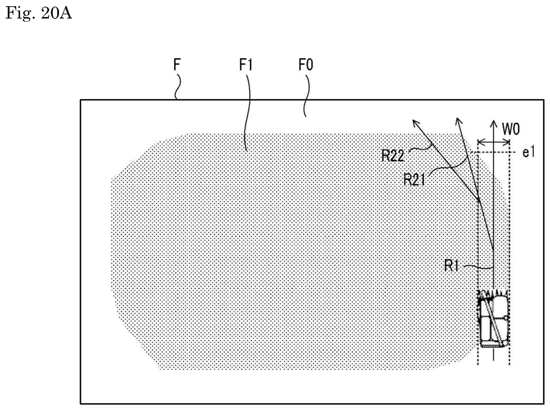

Figs. 20A to 20C show an example of a corner reaping route of the inner peripheral area F1. In addition, in Figs. 20A to 20C, an unworked region and a worked region of the work region information C1 are displayed so as to be distinguishable for convenience. For each work route, the travel processing unit 111 determines whether each of the divisions K is the unworked region or the worked region based on the work status (the work region information C1) of each of the divisions K included in a work target area (a reaping-scheduled area with the work width WO) corresponding to the work route, and determines whether or not to cause the combine harvester 1 to execute the autonomous travel for the work route. Note that the travel processing unit 111 determines whether or not to cause autonomous travel on a work route at the time of starting the autonomous travel on the work route.

For example, as shown in Fig. 20A, since a part of the work target area corresponding to the work route R1 is the unworked region, the travel processing unit 111 determines the work route R1 as a route subjected to autonomous travel (an autonomous travel target route). When the work route R1 is determined to be the route subjected to autonomous travel, the travel processing unit 111 starts autonomous travel of the combine harvester 1 on the work route R1.

In addition, the travel processing unit 111 causes the combine harvester 1 to autonomously travel to a terminal end of the unworked region included in the work target area corresponding to the work route, and stops the autonomous travel at the terminal end.

For example, in the example shown in Fig. 20A, an area up to a position e1 in the work target area corresponding to the work route R1 includes the unworked region, and the entire area beyond the position e1 is the worked region. In this case, the travel processing unit 111 causes the combine harvester 1 to autonomously travel up to the position e1 and stops the autonomous travel at the position e1. Then, the travel processing unit 111 causes the combine harvester 1 to autonomously travel in the backward direction at the position e1. Note that the travel processing unit 111 may cause the combine harvester 1 to travel backward along the work route R1, or may generate a route for backward travel different from the work route R1 and cause the combine harvester 1 to travel backward along the route. In addition, the travel processing unit 111 may generate, for example, a route passing through a position shifted by a predetermined distance (for example, 10 cm) to the outer peripheral side of the field F from the work route R1 (a route obtained by shifting the work route R1 to the outer peripheral side by 10 cm) as the route for backward travel. In addition, the travel processing unit 111 may generate the route for backward travel based on an inclination angle of a route (the first inclined route R21) next to the work route R1.

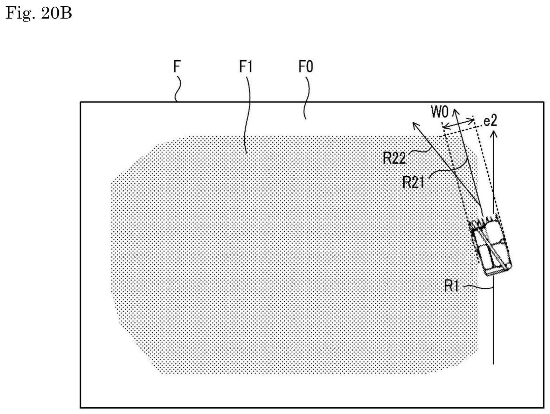

In the example shown in Fig. 20B, since a part of a work target area corresponding to the first inclined route R21 is the unworked region, the travel processing unit 111 determines the first inclined route R21 as a route subjected to autonomous travel (an autonomous travel target route). When the travel processing unit 111 determines the first inclined route R21 as the route subjected to autonomous travel, the travel processing unit 111 starts autonomous travel of the combine harvester 1 on the first inclined route R21.

In addition, an area up to a position e2 in the work target area corresponding to the first inclined route R21 includes the unworked region, and the entire area beyond the position e2 is the worked region. Therefore, the travel processing unit 111 causes the combine harvester 1 to autonomously travel up to the position e2, stops the autonomous travel at the position e2, and causes the combine harvester 1 to autonomously travel in the backward direction.

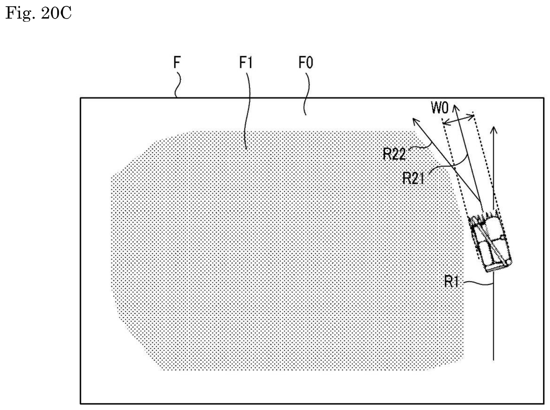

On the other hand, in the example shown in Fig. 20 C, since the entire work target area corresponding to the first inclined route R21 is the worked region, the travel processing unit 111 determines the first inclined route R21 as a route not subjected to autonomous travel (an autonomous travel non-target route). In this case, the travel processing unit 111 skips the first inclined route R21 and moves to the next second inclined route R22.

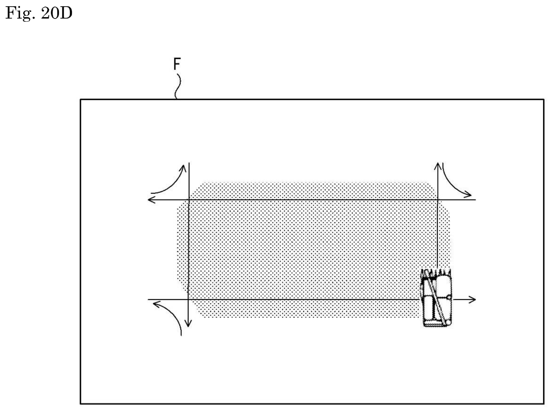

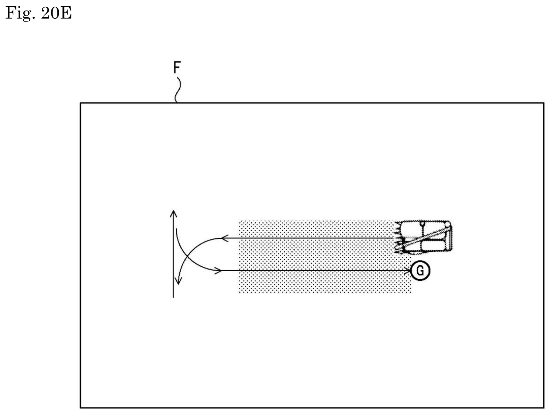

Note that Figs. 20D and 20E show specific examples of the inner peripheral route Rb not including any corner reaping route. The combine harvester 1 performs reaping work while traveling straight along work routes of the inner peripheral route Rb, and performs turning travel in the worked region to move to the next work route. The combine harvester 1 repeats circling until reaching the end position G.

Here, in the above configuration, the registration processing unit 113 registers a position where the combine harvester 1 has traveled (a position where the reaping unit 15 has passed) as a worked region. Therefore, a position where the combine harvester 1 has not traveled (a position where the reaping unit 15 has not passed) is registered as an unworked region. In this case, for example, there arises a problem that an area where the reaping unit 15 has not passed even though a work target object (grain culms as a reaping work target) does not exist in the area is registered as the unworked region, and is determined as a route for executing autonomous travel. Therefore, the travel processing unit 111 may be configured not to cause the combine harvester 1 to autonomously travel on a work route when receiving predetermined operation by the operator, for example, operation to set an autonomous travel unnecessary route (work-unnecessary route), operation to skip autonomous travel, or the like, for example, even if the work route is determined as a route on which the combine harvester 1 is caused to autonomously travel. As another embodiment, the registration processing unit 113 may be configured to register (change) an unworked region as a worked region in the work region information C1 when receiving predetermined operation by the operator, for example, work status changing operation. As another embodiment, the registration processing unit 113 may acquire information indicating positions of a work target area (an area where grain culms exist) and a work non-target area (an area where grain culms do not exist) in the field F, and register the work non-target area as a worked region, or exclude the work non-target area from determination targets for determining whether or not to cause the combine harvester 1 to autonomously travel.

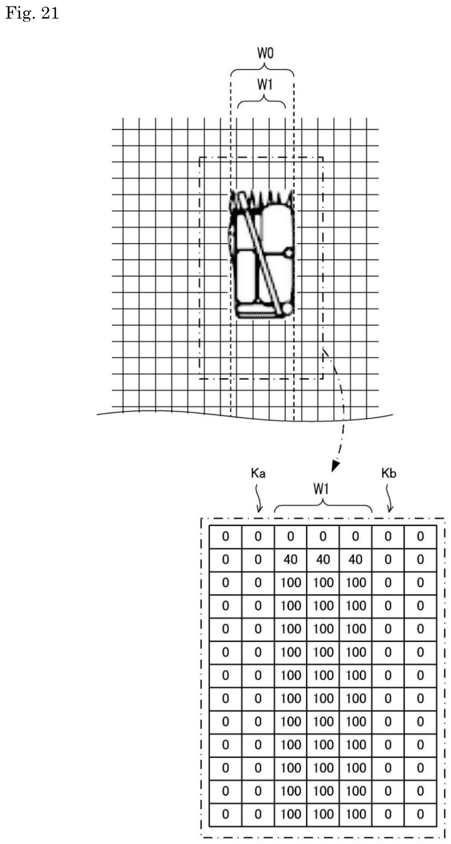

In addition, in the above configuration, the registration processing unit 113 sets the divisions K included in the range of the work width WO corresponding to the width of the reaping unit 15 as a target of determination on whether or not work has been completed. (see Fig. 18). As another embodiment, the registration processing unit 113 may set the divisions K included in a range W1 (see Fig. 21) narrower than the work width WO as a target of determination on whether or not work has been completed. As a result, for example, as shown in Fig. 21, the divisions K (rows Ka and Kb) located at left and right ends of the work width WO are excluded from work determination targets and thus are registered as unworked regions even if reaping work is actually executed thereon. Therefore, the divisions K in the rows Ka and Kb become work target areas in other work routes, and thus reaping work is reliably executed thereon. Therefore, a reaping miss can be prevented from occurring between adjacent work routes.

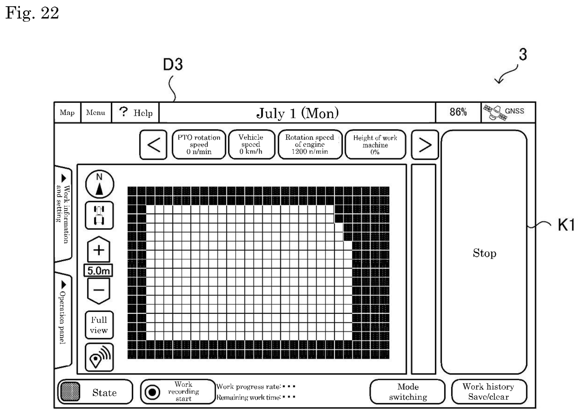

As another embodiment of the third configuration, the operation control unit 31 may cause the operation terminal 3 to display the work status included in the work region information C1 (see Fig. 19). For example, as shown in a travel screen D3 of Fig. 22, the operation control unit 31 displays a worked region colored in a predetermined color on a map of the divisions K corresponding to the field F. In addition, as another embodiment, the operation control unit 31 may display, on the map of the travel screen D3, positions (the divisions K) where the operator has performed reaping work by manual steering and positions (the divisions K) where the combine harvester 1 has performed work by autonomous travel in different modes (different colors). In addition, the operation control unit 31 may display the above-described work target line Ls on the map.

In addition, the operation control unit 31 may display the work rate for each of the divisions K on the map of the travel screen D3. In addition, when the operator selects some division K on the map of the travel screen D3, the operation control unit 31 may display the work rate of the selected division K.

In addition, the work region information C1 and the map may be applied to the corner reaping route generation processing of the second configuration. For example, the generation processing unit 312 may generate a work route and an inclined route having a predetermined inclination angle with respect to the work route based on the positions (the divisions K) of the unworked region and the worked region in the work region information C1. In addition, the generation processing unit 312 may display the map and generate the inclined route by receiving operation to adjust the inclination angle from the operator.

Note that the travel processing unit 111 may perform inclination (UFO control) (incline the entire vehicle body) so as to make a worked region side of the reaping unit 15 higher such that the reaping unit 15 (the divider 28) does not catch the waste straws B1 (see Fig. 4B) discharged to the worked region when the combine harvester 1 travels along each inclined route.

In addition, the travel processing unit 111 may set the vehicle speed of the combine harvester 1 to a lower speed when entering the inclined route. For example, at the corner reaping route shown in Fig. 10, the travel processing unit 111 may set the vehicle speed to a lower speed when a direction of the vehicle is changed for the corner reaping work, such as at the timing of entering the first inclined route R21 from the intersection point P1 and at the timing of entering the second inclined route R22 from the intersection point P2. For example, the travel processing unit 111 sets a vehicle speed setting to 100% with respect to the main shift lever during backward travel along the work route R1 up to a position of the intersection point P1, sets the vehicle speed setting to 70% during a direction change for heading toward the first inclined route R21, during backward travel immediately before the direction change, and during entry to the first inclined route R21, and sets the vehicle speed setting to 100% (a vehicle speed during work) after the entry to the first inclined route R21. As a result, it is possible to improve a feeling (ride comfort) during a sudden direction change and secure safety.

In addition, at the corner reaping work, the work processing unit 112 may continue driving (reaping and threshing) of the reaping unit 15 for a predetermined time after the combine harvester 1 stops at the terminal end (for example, the outermost peripheral position Fc) of the corner reaping route (each inclined route), and stop the driving and raise the reaping unit 15 after the predetermined time has elapsed. Thereafter, the travel processing unit 111 starts backward travel of the combine harvester 1. As a result, it is possible to reliably reap grain culms in the vicinity of the terminal end of each corner reaping route and to reliably thresh the reaped grain culms. Note that the travel processing unit 111 desirably causes the combine harvester 1 to travel up to a position where a cutting blade of the reaping unit 15 enters the outside (a worked area) of an unworked area in each corner reaping route in order to reliably reap grain culms in the unworked area.

### [Autonomous travel processing (Third configuration)]

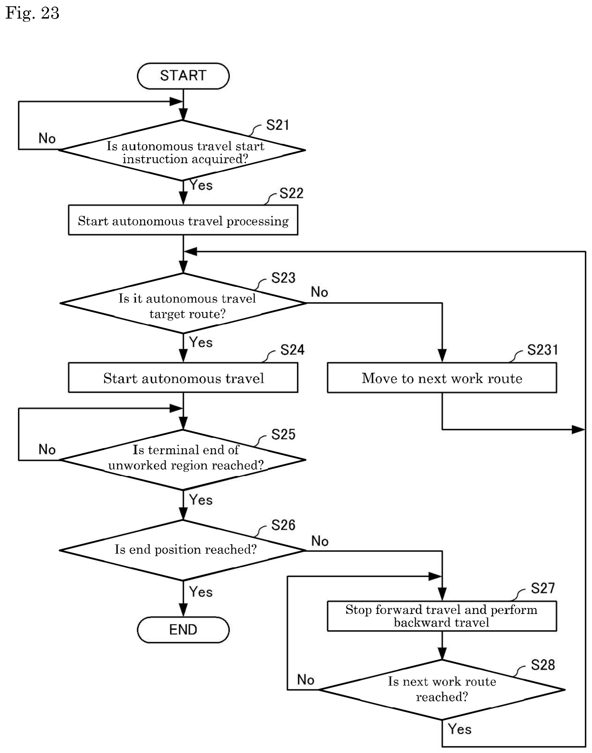

Hereinafter, an example of autonomous travel processing executed by the travel system 10 will be described with reference to Fig. 23.

The present invention can be regarded as an invention of an autonomous travel method for executing one or a plurality of steps included in the autonomous travel processing. In addition, one or a plurality of steps included in the autonomous travel processing described here may be appropriately omitted. In addition, an execution order of each step in the autonomous travel processing may be different within a range in which similar operational effects are produced. Furthermore, here, a case where the vehicle control device 11 executes each step in the autonomous travel processing will be described as an example, but an autonomous travel method in which one or a plurality of processors execute each step in the autonomous travel processing in a dispersed manner is also considered as another embodiment.

### <Step S21>

In step S21, the vehicle control device 11 determines whether or not an autonomous travel start instruction has been acquired. For example, if the combine harvester 1 satisfies an autonomous travel start condition and the operator performs autonomous travel start instruction operation on the operation terminal 3, the vehicle control device 11 acquires the autonomous travel start instruction from the operation terminal 3. When the vehicle control device 11 acquires the autonomous travel start instruction (S21: Yes), the processing proceeds to step S22. The vehicle control device 11 waits until the autonomous travel start instruction is acquired (S21: No).

### <Step S22>

In step S22, the vehicle control device 11 starts the autonomous travel processing. Here, the vehicle control device 11 causes the combine harvester 1 to start autonomous travel from the start position S (see Fig. 4C) of the inner peripheral area F1. Specifically, the vehicle control device 11 causes the combine harvester 1 to start the autonomous travel along the inner peripheral route Rb generated in [Method for generating inner peripheral route Rb (autonomous travel route) (Second configuration)] described above. For example, the vehicle control device 11 starts the autonomous travel from the start position S of the work route R1 of the first round in the inner peripheral area F1.

### <Step S23>

In step S23, the vehicle control device 11 determines whether or not the work route is a route subjected to autonomous travel (an autonomous travel target route). For example, the vehicle control device 11 determines whether or not the work route R1 is the autonomous travel target route at a starting end (the start position S) of the work route R1. Specifically, based on the work status (worked or unworked) of each of the divisions K registered in the work region information C1 (see Fig. 19), the vehicle control device 11 determines the work route R1 as the autonomous travel target route when a part of a work target area corresponding to the work route R1 (for example, a reaping-scheduled area with the work width WO) is an unworked region, and determines the work route R1 as an autonomous travel non-target route when the entire work target area corresponding to the work route R1 is a worked region.

When the vehicle control device 11 determines that the work route is the autonomous travel target route (S23: Yes), the processing proceeds to step S24. On the other hand, when the vehicle control device 11 determines that the work route is not the autonomous travel target route (S23: No), the processing proceeds to step S231.

### <Step S24>

In step S24, the vehicle control device 11 causes the combine harvester 1 to start the autonomous travel. Specifically, the vehicle control device 11 causes the combine harvester 1 to execute work (reaping work) while autonomously traveling along the work route. For example, the vehicle control device 11 causes the combine harvester 1 to execute the reaping work while autonomously traveling in the straight direction along the work route R1 (see Fig. 20A).

### <Step S25>

In step S25, the vehicle control device 11 determines whether or not the combine harvester 1 has reached a terminal end of the unworked region. Specifically, the vehicle control device 11 determines whether or not the combine harvester 1 has reached the terminal end of the unworked region included in the work target area (the reaping-scheduled area with the work width WO) corresponding to the work route. In the example shown in Fig. 20A, the vehicle control device 11 determines that the combine harvester 1 has reached the terminal end of the unworked region when the distal end (the reaping unit 15) of the combine harvester 1 has reached the position e1. When the vehicle control device 11 determines that the combine harvester 1 has reached the terminal end of the unworked region (S25: Yes), the processing proceeds to step S26. The vehicle control device 11 continues the autonomous travel along the work route R1 until the combine harvester 1 reaches the terminal end of the unworked region (S25: No). As described above, when the combine harvester 1 reaches the terminal end of the unworked region before reaching a terminal end of the work route, the vehicle control device 11 causes the processing to proceed to step S26. Note that the vehicle control device 11 may perform inclination (UFO control) to the worked region side of the reaping unit 15 higher such that the reaping unit 15 (the divider 28) does not catch the waste straws B1 (see Fig. 4B) discharged to the worked region when the combine harvester 1 travels along each inclined route.

### <Step S26>

In step S26, the vehicle control device 11 determines whether or not the combine harvester 1 has reached the end position G (see Fig. 4C). When determining that the combine harvester 1 has reached the end position G (S26: Yes), that is, when the terminal end of the unworked region is the end position G, the vehicle control device 11 ends the autonomous travel processing. When the vehicle control device 11 determines that the combine harvester 1 has not reached the end position G (S26: No), the processing proceeds to step S27.

### <Step S27>

In step S27, the vehicle control device 11 causes the combine harvester 1 to stop the autonomous travel in the forward direction and perform autonomous travel in the backward direction. In the example shown in Fig. 20A, the vehicle control device 11 causes the combine harvester 1 autonomously traveling along the work route R1 to stop at the position e1, which is the terminal end of the unworked region and stop the reaping work, and then perform the autonomous travel in the backward direction along the work route R1 or another backward travel route.

### <Step S28>

In step S28, the vehicle control device 11 determines whether or not the combine harvester 1 has reached the next work route. When the vehicle control device 11 determines that the combine harvester 1 has reached the next work route (S28: Yes), the processing proceeds to step S23. The vehicle control device 11 continues the backward travel until the combine harvester 1 reaches the next work route (S28: No). For example, in the example shown in Fig. 10, when the combine harvester 1 reaches the intersection point P1 between the first inclined route R21 and the work route R1, the vehicle control device 11 causes the processing to proceed to step S23.

When proceeding to step S23, the vehicle control device 11 determines whether or not the next first inclined route R21 is an autonomous travel target route, and in the case of the autonomous travel target route (S23: Yes), the vehicle control device starts the autonomous travel (S24).

### <Step S231>

In step S231, the vehicle control device 11 causes the combine harvester 1 to move to the next work route. Specifically, when determining that the entire work target area corresponding to the work route is the worked region and the work route is not the autonomous travel target route (is an autonomous travel non-target route) (S23: No), the vehicle control device 11 causes the combine harvester 1 to skip the work route and move to the next work route. Thereafter, the vehicle control device 11 causes the processing to proceed to step S23, determines whether or not the next work route is an autonomous travel target route, and in the case of the autonomous travel target route (S23: Yes), starts the autonomous travel (S24).

As described above, the vehicle control device 11 repeatedly executes the above-described processing from the start position S to the end position G in the inner peripheral area F1, determines whether or not to execute the autonomous travel for each work route, and causes the combine harvester 1 to execute the autonomous travel and the reaping work along the inner peripheral route Rb.

As described above, the travel system 10 according to the third configuration has a configuration to cause the combine harvester 1 to autonomously travel along a target route including a plurality of work routes for the combine harvester 1 to autonomously travel while performing predetermined work (reaping work) in the field F. In addition, the travel system 10 has a configuration to determine, for each work route, whether or not to cause the combine harvester 1 to execute the autonomous travel based on the work region information C1 (see Fig. 19) including information on an unworked region where work has not finished in the field F and information on a worked region where work has finished.

Specifically, when the entire work target area corresponding to a work route is the worked region, the travel system 10 determines the work route as a route (autonomous travel non-target route) on which the combine harvester 1 is not caused to autonomously travel. In addition, when at least a part of a work target area corresponding to a work route is the unworked region, the travel system 10 determines the work route as a route (autonomous travel target route) on which the combine harvester 1 is caused to autonomously travel.

According to the above configuration, for example, if it is determined that the entire work route is the worked region and the autonomous travel is not necessary at the time of starting the autonomous travel of the work route, the autonomous travel of the work route can be omitted. Therefore, it is possible to prevent useless autonomous travel on the worked region, so that the work efficiency can be improved.

Although the operation terminal 3 is configured to generate the inner peripheral route Rb in the above configuration, as another embodiment, the vehicle control device 11 of the combine harvester 1 may be configured to generate the inner peripheral route Rb. Alternatively, the operation terminal 3 may generate the inner peripheral route Rb excluding a corner reaping route, and the vehicle control device 11 may generate the corner reaping route. For example, the vehicle control device 11 may correct the inner peripheral route Rb generated in the operation terminal 3 based on the work region information C1 to generate the corner reaping route.

### [Operation control of work machine (reaping unit 15) (Fourth configuration)]

A specific example of a control method (the fourth configuration) for an operation of the work machine (the reaping unit 15) when the combine harvester 1 is caused to autonomously travel along the autonomous travel route (the inner peripheral route Rb) generated in the inner peripheral area F1 in the second configuration will be described. The travel system 10 has a configuration to control a position (posture) of the reaping unit 15 according to work region information indicating whether a work target region (work target position) of reaping work is an unworked region where reaping work has not finished or a worked region where reaping work has finished.

Specifically, the work processing unit 112 of the vehicle control device 11 controls the operation (position) of the reaping unit 15 based on the work region information C1 (see Fig. 19) registered by the third configuration.

For example, the work processing unit 112 determines whether each of the divisions K is the unworked region or the worked region based on the work status (the work region information C1) of each of the divisions K included in a work target area (a reaping-scheduled area with the work width WO) corresponding to a work route, and sets the reaping unit 15 to the work height H1 (see Fig. 7C) or the non-work height H0 (see Fig. 7A) on the work route. Specifically, on the work route, the work processing unit 112 sets the reaping unit 15 to the work height H1 in the unworked region, and sets the reaping unit 15 to the non-work height H0 in the worked region.

For example, in the example shown in Fig. 20A, the area up to the position e1 in the work target area corresponding to the work route R1 includes the unworked region, and the entire area beyond the position e1 is the worked region. In this case, the work processing unit 112 lowers the reaping unit 15 to the work height H1 at the starting end of the work route R1 or in front of the starting end, maintains the reaping unit 15 at the work height H1 up to the position e1, and raises the reaping unit 15 to the non-work height H0 at the position e1 or a position after passage through the position e1. While the travel processing unit 111 causes the combine harvester 1 to travel backward along the work route R1, the work processing unit 112 maintains the reaping unit 15 at the non-work height H0. As another embodiment, when the combine harvester 1 is caused to travel backward, the work processing unit 112 may set the reaping unit 15 to the intermediate height H2 (see Fig. 7B) at which the waste straws B1 can be prevented from being entangled. In addition, in a case where the reaping unit 15 is set to the intermediate height H2, the work processing unit 112 may stop the operation of the reaping unit 15.

In the example shown in Fig. 20B, the area up to the position e2 in the work target area corresponding to the first inclined route R21 includes the unworked region, and the entire area beyond the position e2 is the worked region. Therefore, the work processing unit 112 lowers the reaping unit 15 to the work height H1 at the starting end of the first inclined route R21 or in front of the starting end, maintains the reaping unit 15 at the work height H1 up to the position e2, and raises the reaping unit 15 to the non-work height H0 at the position e2 or a position after passage through the position e2. While the travel processing unit 111 causes the combine harvester 1 to travel backward along the first inclined route R21, the work processing unit 112 maintains the reaping unit 15 at the non-work height H0 or the intermediate height H2.

In the example shown in Fig. 20C, since the entire work target area corresponding to the first inclined route R21 is the worked region, the work processing unit 112 maintains the reaping unit 15 at the non-work height H0 or the intermediate height H2.

As another embodiment, the work processing unit 112 may lower the reaping unit 15 from the non-work height H0 to the work height H1 during the backward travel of the combine harvester 1. For example, the work processing unit 112 starts lowering during the backward travel such that the reaping unit 15 is set to the work height H1 at the time when the combine harvester 1 reaches a terminal end of a backward route or a starting end of the next work route. As a result, reaping work can be immediately started on the next work route.

In addition, as another embodiment, during travel on an inclined route (the first inclined route R21 or the second inclined route R22), the work processing unit 112 may perform inclination (UFO control) to raise a worked work route side with respect to a horizontal height of the reaping unit 15. For example, when the combine harvester 1 travels along the first inclined route R21, the work processing unit 112 raises the right side (the work route R1 side) of the reaping unit 15 to be higher than the work height H1, and causes the reaping unit 15 to execute reaping work in the inclined state. As a result, the reaping work on the first inclined route R21 can be performed without entanglement of the waste straws B1 (see Fig. 4B) discharged by the reaping work on the work route R1. In addition, the work processing unit 112 may lower the right side of the reaping unit 15 to the normal work height H1 and restore the horizontal state after the combine harvester 1 has passed through the waste straws B1.

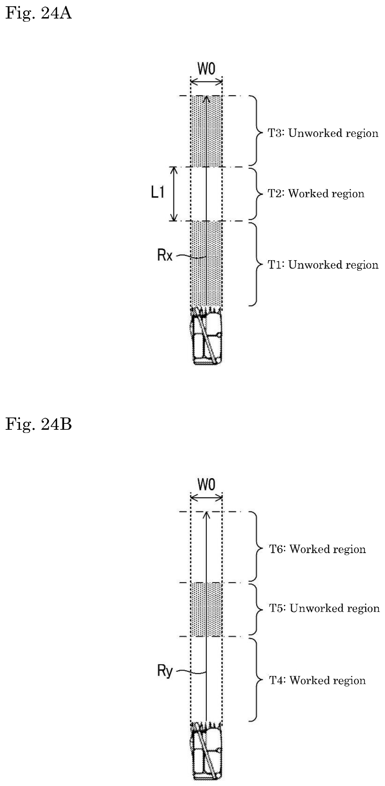

Here, there is a case where an intermediate position between a starting end and a terminal end of one work route is a worked region in a work target area corresponding to the work route. For example, as shown in Fig. 24A, there is a case where a section T1 from a starting end of a work route Rx is an unworked region, a section T2 following the section T1 is a worked region, and a section T3 following the section T2 is an unworked region. In this case, the work processing unit 112 maintains the reaping unit 15 at the work height H1 in the section T1, sets the reaping unit 15 to the non-work height H0 or the intermediate height H2 after entry to the worked region (the section T2), and sets the reaping unit 15 to the work height H1 before entry to the unworked region (the section T3).

As another embodiment, the work processing unit 112 may set the height of the reaping unit 15 in accordance with a distance L of the worked region (the section T2). For example, when the distance L is a predetermined distance or more, the work processing unit 112 sets the reaping unit 15 to the non-work height H0 in the section T2. On the other hand, when the distance L is less than the predetermined distance, the work processing unit 112 sets the reaping unit 15 to the intermediate height H2 in the section T2. In addition, as another embodiment, the work processing unit 112 may set (maintain) the reaping unit 15 at the work height H1 in the section T2 when the distance L is less than the predetermined distance and there is no waste straw in the worked region of the section T2.

In addition, for example, the work processing unit 112 may stop driving of the reaping unit 15 in the section T2 when the distance L is a predetermined distance or more, and maintain the driving of the reaping unit 15 in the section T2 when the distance L is less than the predetermined distance.

As another embodiment, the registration processing unit 113 may register "unworked" (see Fig. 19) in the work status of the division K included in the section T2 when the distance L is less than a predetermined distance. For example, in the work region information C1, when the distance L of the division K in the worked region ("worked: 0") located between the unworked regions ("unworked: 1") is less than the predetermined distance, the registration processing unit 113 changes "worked" to "unworked". As a result, the work processing unit 112 can set (maintain) the reaping unit 15 at the work height H1 in the division K of the section T2 by referring to the work region information C1.

In addition, there is a case where an intermediate position between a starting end and a terminal end of one work route is an unworked region in a work target area corresponding to the work route. For example, as shown in Fig. 24B, there is a case where a section T4 from a starting end of a work route Ry is a worked region, a section T5 following the section T4 is an unworked region, and a section T6 following the section T5 is a worked region. In this case, the work processing unit 112 maintains the reaping unit 15 at the non-work height H0 or the intermediate height H2 in the section T4, sets the reaping unit 15 at the work height H1 before entry to the unworked region (the section T5), and sets the reaping unit 15 at the non-work height H0 or the intermediate height H2 after passage through a terminal end of the unworked region (the section T5) (after entry to the worked region (the section T6)).

Although the combine harvester 1 has been described as an example in the above embodiment, when the work vehicle is a tractor and the work machine is a cultivator, the non-work height H0 is a height at which the cultivator is at the uppermost position, and the intermediate height H2 is a height at which a rotary and a cover are not in contact with the cultivated ground. The fourth configuration can be applied to various work vehicles such as a tractor without being limited to the combine harvester 1.

Here, the work processing unit 112 may determine the timing (lowering instruction timing) to start lowering the work machine based on a moving speed (lowering speed) of the work machine and a traveling speed of the work vehicle. For example, when the lowering speed of the work machine is set in advance, the work processing unit 112 calculates a time (required lowering time) required for movement from a current height to a work height (lowermost position) based on position information on the current height of the work machine and the lowering speed, and calculates a traveling distance of the work vehicle during the required lowering time based on the calculated required lowering time and a current traveling vehicle speed of the work vehicle. Then, the work processing unit 112 outputs a lowering instruction for the work machine at a position in front of a work start position by the distance. That is, the work processing unit 112 determines the operation timing of the work machine based on the traveling vehicle speed of the work vehicle and a movement time required for the work machine to move from a current position (for example, a non-work position) to a work position.

### [Operation control processing of work machine (reaping unit 15) (Fourth configuration)]

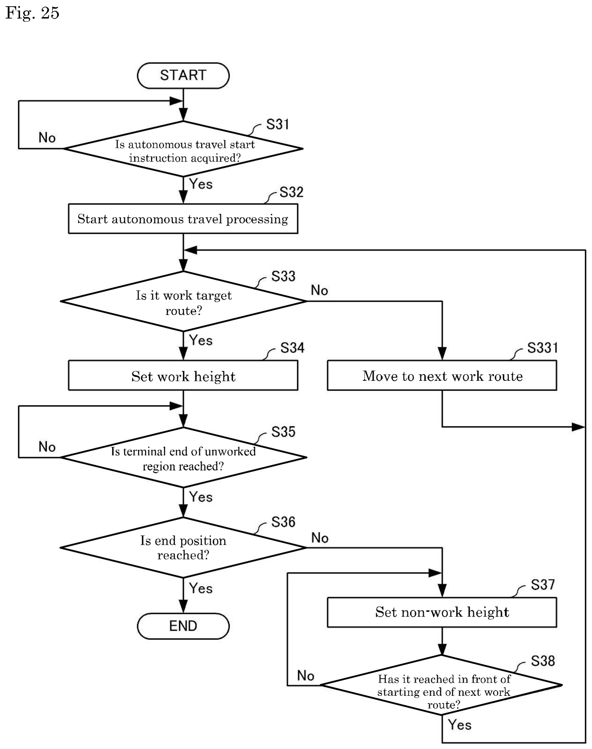

Hereinafter, an example of operation control processing of the reaping unit 15 executed by the travel system 10 will be described with reference to Fig. 25.

The present invention can be regarded as an invention of an operation control method for executing one or a plurality of steps included in the operation control processing. Furthermore, one or a plurality of steps included in the operation control processing described here may be appropriately omitted. In addition, an execution order of each step in the operation control processing may be different within a range in which similar operational effects are produced. Furthermore, here, a case where the vehicle control device 11 executes each step in the operation control processing will be described as an example, but an operation control method in which one or a plurality of processors execute each step in the operation control processing in a dispersed manner is also considered as another embodiment.

The operation control processing can be applied to the autonomous travel processing (see Fig. 23) corresponding to the second configuration, and the travel system 10 can execute the following operation control processing together with the autonomous travel processing. Hereinafter, description will be given focusing on the operation control processing of the reaping unit 15.

### <Step S31>

In step S31, the vehicle control device 11 determines whether or not an autonomous travel start instruction has been acquired. For example, if the combine harvester 1 satisfies an autonomous travel start condition and the operator performs autonomous travel start instruction operation on the operation terminal 3, the vehicle control device 11 acquires the autonomous travel start instruction from the operation terminal 3. When the vehicle control device 11 acquires the autonomous travel start instruction (S31: Yes), the processing proceeds to step S32. The vehicle control device 11 waits until the autonomous travel start instruction is acquired (S31: No).

### <Step S32>

In step S32, the vehicle control device 11 starts the autonomous travel processing. Here, the vehicle control device 11 causes the combine harvester 1 to start autonomous travel from the start position S (see Fig. 4C) of the inner peripheral area F1. Specifically, the vehicle control device 11 causes the combine harvester 1 to start the autonomous travel along the inner peripheral route Rb generated in [Method for generating inner peripheral route Rb (autonomous travel route) (Second configuration)] described above. For example, the vehicle control device 11 starts the autonomous travel from the start position S of the work route R1 of the first round in the inner peripheral area F1.

### <Step S33>

In step S33, the vehicle control device 11 determines whether or not the work route is a route (work target route) subjected to reaping work. For example, the vehicle control device 11 determines whether or not the work route R1 is the work target route at a starting end (the start position S) of the work route R1. Specifically, based on the work status (worked or unworked) of each of the divisions K registered in the work region information C1 (see Fig. 19), the vehicle control device 11 determines the work route R1 as the work target route when a part of a work target area corresponding to the work route R1 (for example, a reaping-scheduled area with the work width WO) is an unworked region, and determines the work route R1 as a work non-target route when the entire work target area corresponding to the work route R1 is a worked region.

When the vehicle control device 11 determines that the work route is the work target route (S33: Yes), the processing proceeds to step S34. On the other hand, when the vehicle control device 11 determines that the work route is not the work target route (S33: No), the processing proceeds to step S331.

### <Step S34>

In step S34, the vehicle control device 11 sets the reaping unit 15 to the work height H1 (see Fig. 7C). In addition, the vehicle control device 11 executes the work (reaping work) with the autonomous travel along the work route. For example, the vehicle control device 11 causes the combine harvester 1 to execute the reaping work while autonomously traveling in the straight direction along the work route R1 (see Fig. 20A).

### <Step S35>

In step S35, the vehicle control device 11 determines whether or not the combine harvester 1 has reached a terminal end of the unworked region. Specifically, the vehicle control device 11 determines whether or not the combine harvester 1 has reached the terminal end of the unworked region included in the work target area (the reaping-scheduled area with the work width WO) corresponding to the work route. In the example shown in Fig. 20A, the vehicle control device 11 determines that the combine harvester 1 has reached the terminal end of the unworked region when the distal end (the reaping unit 15) of the combine harvester 1 has reached the position e1. When the vehicle control device 11 determines that the combine harvester 1 has reached the terminal end of the unworked region (S35: Yes), the processing proceeds to step S36. The vehicle control device 11 maintains the reaping unit 15 at the work height H1 until the combine harvester 1 reaches the terminal end of the unworked region, and continues the autonomous travel and the reaping work along the work route R1 (S35: No). When the combine harvester 1 reaches the terminal end of the unworked region before reaching a terminal end of the work route, the vehicle control device 11 causes the processing to proceed to step S36.

### <Step S36>

In step S36, the vehicle control device 11 determines whether or not the combine harvester 1 has reached the end position G (see Fig. 4C). When determining that the combine harvester 1 has reached the end position G (S36: Yes), the vehicle control device 11 ends the operation control processing. When the vehicle control device 11 determines that the combine harvester 1 has not reached the end position G (S36: No), the processing proceeds to step S37.

### <Step S37>

In step S37, the vehicle control device 11 sets the reaping unit 15 to the non-work height H0. In the example shown in Fig. 20A, the vehicle control device 11 stops the autonomous travel of the combine harvester 1 in the forward direction, and raises the reaping unit 15 to the non-work height H0 and causes autonomous travel in the backward direction. Specifically, the vehicle control device 11 causes the combine harvester 1 autonomously traveling along the work route R1 to stop at the position e1, which is the terminal end of the unworked region, or a position after passage through the position e1 and raises the reaping unit 15 to the non-work height H0, and then causes the autonomous travel in the backward direction along the work route R1 or another backward travel route. Note that the vehicle control device 11 may set the reaping unit 15 to the intermediate height H2 (see Fig. 7B) when causing the combine harvester 1 to travel backward. In addition, the vehicle control device 11 may start lowering the reaping unit 15 before the combine harvester 1 reaches a terminal end (for example, the intersection point P1 (see Fig. 10)) of the backward travel.

### <Step S38>

In step S38, the vehicle control device 11 determines whether or not the combine harvester 1 has reached in front of a starting end of the next work route. Specifically, the vehicle control device 11 calculates the lowering start timing of the reaping unit 15 based on the traveling vehicle speed of the combine harvester 1 and the required lowering time of the reaping unit 15, and determines whether or not a position at which the lowering start timing arrives has been reached. When the vehicle control device 11 determines that the combine harvester 1 has reached in front of the starting end of the next work route (S38: Yes), the processing proceeds to step S33. The vehicle control device 11 maintains the reaping unit 15 at the non-work height H0 and continues the backward travel until the combine harvester 1 reaches in front of the starting end of the next work route (S38: No).

When proceeding to step S33, the vehicle control device 11 determines whether or not the next first inclined route R21 is a work target route, and in the case of the work target route (S33: Yes), sets the reaping unit 15 to the work height H1 and starts autonomous travel (S34). That is, the vehicle control device 11 starts lowering the reaping unit 15 at the time when the combine harvester 1 has reached in front of a starting end of the next work route such that the reaping unit 15 is set to the work height H1 at the starting end of the next work route.

### <Step S331>

In step S331, the vehicle control device 11 causes the combine harvester 1 to move to the next work route. Specifically, when determining that the entire work target area corresponding to the work route is the worked region and the work route is not the work target route (is a work non-target route) (S33: No), the vehicle control device 11 causes the combine harvester 1 to skip the work route and move to the next work route. Thereafter, the vehicle control device 11 causes the processing to proceed to step S33, determines whether or not the next work route is the work target route, and in the case of the work target route (S33: Yes), sets the reaping unit 15 to the work height H1 and starts autonomous travel (S34).

As described above, the vehicle control device 11 controls a position of the reaping unit 15 by repeatedly executing the above-described processing while the combine harvester 1 travels from the start position S to the end position G in the inner peripheral area F1.

As described above, the travel system 10 according to the fourth configuration has a configuration to cause the reaping unit 15 to perform predetermined work while causing the combine harvester 1 to autonomously travel along a target route in the field F. In addition, the travel system 10 has a configuration to control the operation of the reaping unit 15 based on the work region information C1 (see Fig. 19) including information on an unworked region where work has not finished in the field F and information on a worked region where work has finished.

Specifically, the travel system 10 sets the reaping unit 15 to the work position (the work height H1) before the combine harvester 1 enters the unworked region from the worked region, and sets the reaping unit 15 to the non-work position (the non-work height H0) after the combine harvester 1 enters the worked region from the unworked region.

According to the above configuration, for example, if it is determined that the entire work route is the worked region and work is not necessary when the combine harvester 1 starts the autonomous travel of the work route, the work on the work route can be omitted. In addition, when the work route includes the worked region and the unworked region, the reaping unit 15 is set to the work height H1 to execute the work in the unworked region, and the reaping unit 15 is set to the non-work height H0 in the worked region, whereby useless movement (posture change) of the reaping unit 15 can be prevented. Therefore, it is possible to prevent the useless autonomous travel and work in the worked region, so that the work efficiency can be improved. In addition, since the reaping unit 15 is set to the work height H1 before the combine harvester 1 enters the unworked region from the worked region, and the reaping unit 15 is set to the non-work height H0 after the combine harvester 1 enters the worked region from the unworked region, it is possible to prevent a work omission (reaping miss) in the unworked region.

### [Other embodiments]

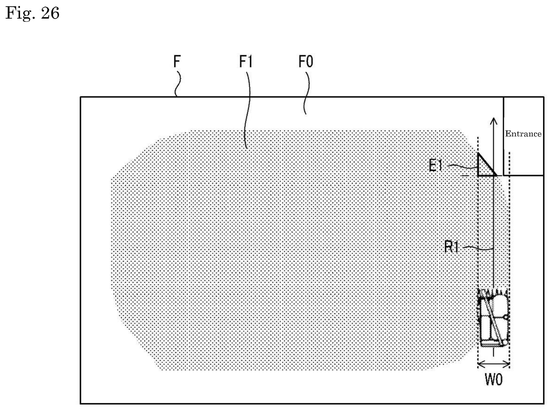

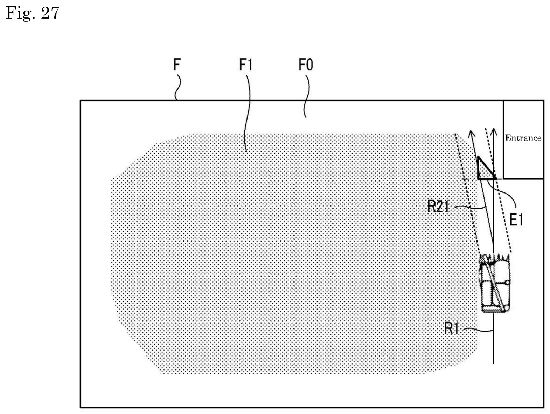

The present invention is not limited to the above-described embodiments. Other embodiments of the present invention will be described hereinafter.
(1) For example, as shown in Fig. 26, there is a case where an entrance is set at a corner of the field F. In this case, when the combine harvester 1 autonomously travels along the work route R1 and performs reaping work, the autonomous travel is stopped in front of the entrance to cause a reaping miss (a reaping-missed area E1) in an area at and beyond the entrance in a work target area. Therefore, for example, as shown in Fig. 27, the generation processing unit 312 may shift the first inclined route R21, which is the next corner reaping route of the work route R1, to the work route R1 side from an original position (a pitch of the work width WO). Specifically, the generation processing unit 312 generates the first inclined route R21 such that the reaping-missed area E1 is included in the work target area.

As described above, the generation processing unit 312 may have a configuration to generate a second work route such that the reaping-missed area E1 is included in a work target area of the second work route subsequent to a first work route when the reaping-missed area E1 is generated by reaping work of the first work route in a corner reaping route. This makes it possible to prevent the occurrence of the reaping miss.

In the above configuration, the generation processing unit 312 may generate or shift the second work route based on the work region information C1 (see Fig. 19), may generate or shift the second work route based on the work target line Ls (recommended reaping line), or may generate or shift the second work route based on information on an unworked region or a worked region specified from an image captured by a camera of the combine harvester 1.

Note that the above configuration is not limited to the configuration in which oblique reaping is performed at each corner (see Fig. 10), and is also applicable to the configuration in which parallel reaping is performed at each corner (see Fig. 15).

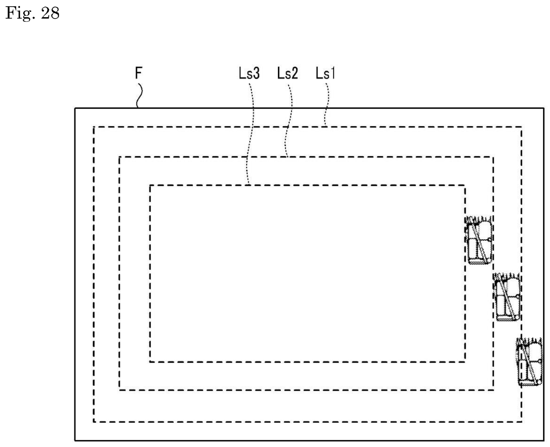

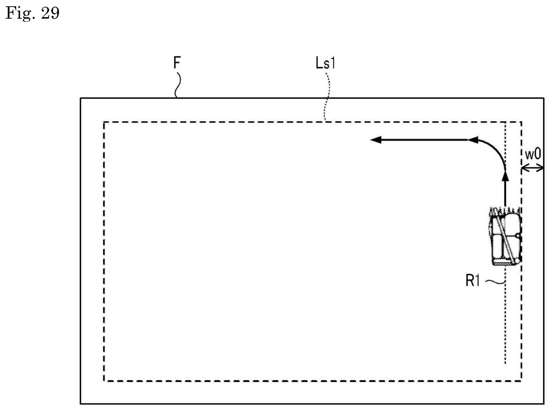

(2)
The generation processing unit 312 may set a plurality of the work target lines Ls. For example, as shown in Fig. 28, the generation processing unit 312 sets a work target line Ls1 on the outermost peripheral side of the field F, a work target line Ls2 inside the work target line Ls1, and a work target line Ls3 inside the work target line Ls2. The work target line Ls1 represents a target position (mark) when the operator causes manual travel for one round of the outermost periphery of the field F to perform reaping work, and corresponds to the above-described work target line Ls (see Fig. 14). For example, as shown in Fig. 29, the work target line Ls1 is set at a position where turning is possible at each corner of a work route of the second round and an autonomous travel route including a corner reaping route can be generated from the second round. For example, when the operator performs the reaping work by the manual travel so as to include the position of the work target line Ls1, the generation processing unit 312 permits generation of the autonomous travel route for the second and subsequent rounds. Here, in order to enable autonomous travel in the second and subsequent rounds, the work target line Ls1 is desirably set at a position whose distance from a boundary of the field F is narrower than the work width (one stroke). That is, a width w0 shown in Fig. 29 is desirably narrower than the work width. Note that, when the width w0 of the work target line Ls1 is too small, an area necessary for turning cannot be secured at each corner in the second round, and thus, the width w0 is set to a width with which turning is possible.

In addition, the work target line Ls2 represents a target position (mark) when the operator causes manual travel for two rounds of the outermost periphery of the field F to perform reaping work, and is set at a position shifted to the inside of the work target line Ls1 by the work width (one stroke). For example, when the operator performs the reaping work by the manual travel so as to include the position of the work target line Ls2, the generation processing unit 312 permits generation of the autonomous travel route for the third and subsequent rounds.

In addition, the work target line Ls3 represents a target position (mark) when the operator causes manual travel for three rounds of the outermost periphery of the field F to perform reaping work, and is set at a position further shifted to the inside of the work target line Ls2 by the work width (one stroke). For example, when the operator performs the reaping work by the manual travel so as to include the position of the work target line Ls3, the generation processing unit 312 permits generation of the autonomous travel route for the fourth and subsequent rounds.

The work target lines Ls1 to Ls3 are displayed on the operation terminal 3. As another embodiment, the generation processing unit 312 may display any predetermined work target line Ls among the work target lines Ls1 to Ls3 in accordance with operation of the operator. For example, in a case where the operator has performed setting such that manual travel is performed in the first round (the outermost periphery) and autonomous travel is performed from the second round, the generation processing unit 312 displays only the work target line Ls1 among the work target lines Ls1 to Ls3. In addition, for example, in a case where the operator has performed setting such that manual travel is performed in the first and second rounds and autonomous travel is performed from the third round, the generation processing unit 312 displays only the work target line Ls2 among the work target lines Ls1 to Ls3. In addition, for example, in a case where the operator has performed setting such that manual travel is performed in the first to third rounds and autonomous travel is performed from the fourth round, the generation processing unit 312 displays only the work target line Ls3 among the work target lines Ls1 to Ls3.

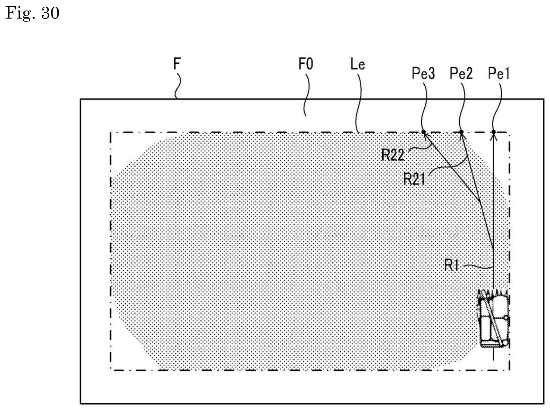

(3)
When generating the work route R1, the generation processing unit 312 may set a terminal end Pe of the work route R1 based on a work position of the outermost peripheral area F0. For example, as shown in Fig. 30, the generation processing unit 312 sets an inner boundary of a work trajectory of reaping work in the outermost peripheral area F0 (a line (worked line Le) surrounding a remaining unreaped area), and sets a terminal end Pe1 in the work route R1 on the worked line Le. As described above, the generation processing unit 312 sets the terminal end Pe1 by extending the work route R1 to the worked line Le without considering a work trajectory at each corner (a boundary between a reaped area and an unreaped area). Similarly, the generation processing unit 312 sets terminal ends Pe2 and Pe3 of the first inclined route R21 and the second inclined route R22 on the worked line Le.

In addition, when generating the work route R1, the generation processing unit 312 may determine a position of the work route R1 in the left-right direction such that a width of the combine harvester 1 in the left-right direction partially overlaps the reaped area (such that the outer peripheral side of a stroke in the second round overlaps the inside of a stroke in the outermost periphery). As a result, it is possible to prevent a gap (unworked region) from being generated between adjacent strokes.

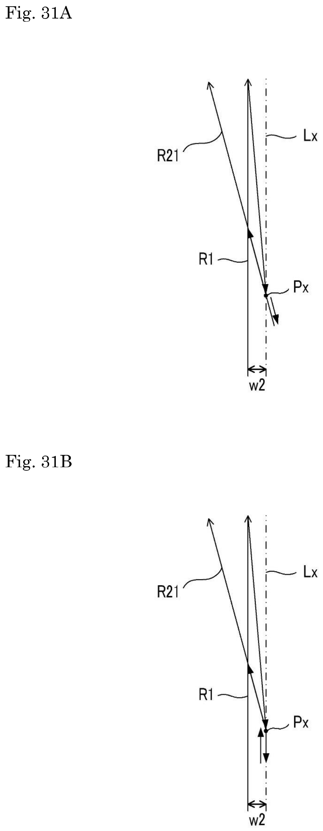

(4)
The vehicle control device 11 may cause work at the corners as follows. For example, as shown in Figs. 31A to 31C, the vehicle control device 11 sets a reference line Lx parallel to the work route R1 at a position, on the outer peripheral side of the field F, away from the work route R1 by a predetermined distance w2 (for example, 10 cm), and sets an intersection point Px between an extension line of the first inclined route R21 and the reference line Lx. The vehicle control device 11 causes the combine harvester 1 to travel along the work route R1 and then travel backward toward the intersection point Px. Then, the vehicle control device 11 causes backward turning travel along the extension line of the first inclined route R21 at the intersection point Px, and then switches to forward travel to cause straight travel along the first inclined route R21. Note that a distance to travel backward from the intersection point Px may be changeable. In addition, the intersection point Px may be set at a position of, for example, 12 m from the terminal end of the work route R1.

As another embodiment, when the rear end of the vehicle body of the combine harvester 1 protrudes out of the field F during the backward turning travel from the intersection point Px, the vehicle control device 11 may perform backward straight travel along the reference line Lx at the intersection point Px as shown in Fig. 31B, and then switch to forward travel to cause forward turning travel and the straight travel along the first inclined route R21. A distance to travel backward from the intersection point Px may be changeable.

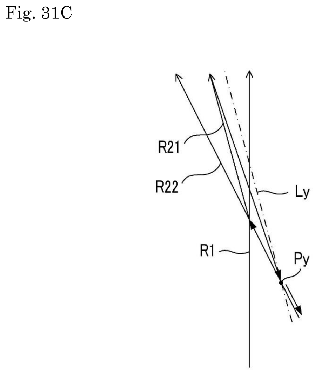

Similarly for the second inclined route R22, as shown in Fig. 31C, the vehicle control device 11 sets a reference line Ly parallel to the first inclined route R21 at a position, on the outer peripheral side of the field F, away from the first inclined route R21 by a predetermined distance, and sets an intersection point Py between an extension line of the second inclined route R22 and the reference line Ly. The vehicle control device 11 causes the combine harvester 1 to travel straight along the first inclined route R21 and then travel backward toward the intersection point Py. Then, the vehicle control device 11 causes backward turning travel along the extension line of the second inclined route R22 at the intersection point Py, and then switches to forward travel to cause straight travel along the second inclined route R22. In addition, when the rear end of the vehicle body of the combine harvester 1 protrudes out of the field F, the vehicle control device 11 may cause the combine harvester 1 to travel backward along the reference line Ly at the intersection point Py, and then switch to forward travel to cause forward turning travel and the straight travel along the second inclined route R22.

In addition, the vehicle control device 11 may start lowering of the reaping unit 15 after setting the vehicle speed to a lower speed when the combine harvester 1 is switched from backward travel to forward travel, may cause travel at the lower speed for a time required for the reaping unit 15 to be lowered to the work height H1, and may return to the original vehicle speed (set vehicle speed) after the time has elapsed.

In addition, when the combine harvester 1 moves from a work route (for example, the work route R1) to a non-work route (backward route), the vehicle control device 11 may switch to backward travel at the time when the distal end of the reaping unit 15 reaches the terminal end of the work route R1. On the other hand, when the combine harvester 1 moves from the non-work route to the work route, the vehicle control device 11 may switch to forward travel at the time when a center position of the combine harvester 1 (center positions of the crawlers) reaches a terminal end of the non-work route. That is, the vehicle control device 11 performs control (route switching control, vehicle speed control, and the like) using a distal end position of the combine harvester 1 (the position of the reaping unit 15) as a current position of the vehicle when the combine harvester 1 moves from the work route to the non-work route, and performs control using the center position of the combine harvester 1 (the center positions of the crawlers) as the current position of the vehicle when the combine harvester 1 moves from the non-work route to the work route.

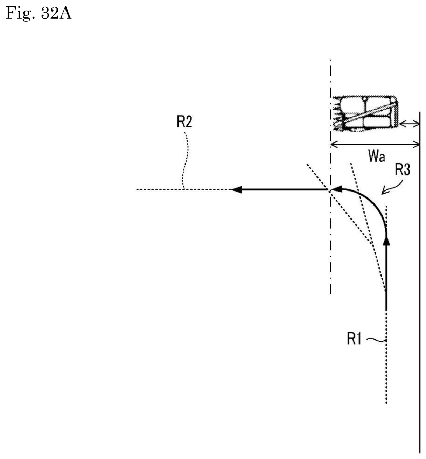

(5)
The vehicle control device 11 may cause travel along the movement route R3 (see Fig. 11) at the corner as follows. For example, when the combine harvester 1 moves from the work route R1 to the next work route R2 in the second round, the vehicle control device 11 causes the combine harvester 1 to perform corner reaping work so as to secure a width Wa that enables turning only by forward travel without switching between forward travel and backward travel (see Fig. 32A). In addition, the vehicle control device 11 may cause backward travel and turning travel when the width Wa cannot be secured. The width Wa is a width that enables the combine harvester 1 to directly face the work route R2 and prevents the distal end of the reaping unit 15 from entering an unworked area. Note that the width Wa may be a width that enables the combine harvester 1 to directly face the work route R2 in a state in which the cutting blade of the reaping unit 15 has entered the unworked area.

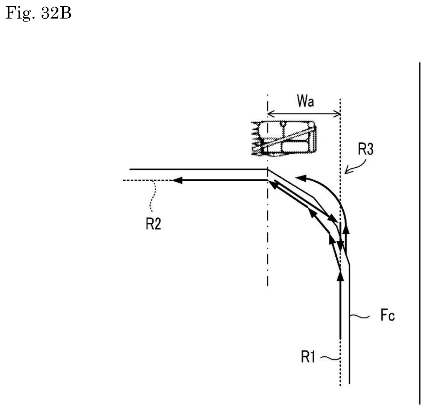

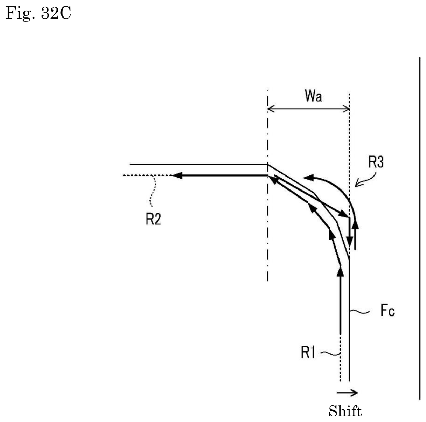

Fig. 32B shows an example in which the combine harvester 1 performs corner reaping in the third round and travels along the movement route R3 to move to the next work route R2. The vehicle control device 11 causes the combine harvester 1 to travel along the outermost peripheral position Fc (a colored shape on the map) of the unworked area to execute the corner reaping work. In the third round, when the width Wa that enables turning only by forward travel is not secured without switching between forward travel and backward travel in a case where the combine harvester 1 moves from the work route R1 to the next work route R2 (see Fig. 32B), that is, when the reaping unit 15 (cutting blade) enters the unworked area in a case where the combine harvester 1 directly faces the work route R2, the vehicle control device 11 may shift a turning start position to the outer peripheral side of the field F as shown in Fig. 32C.

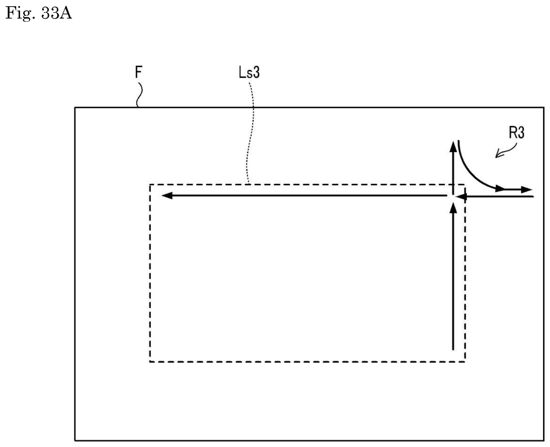

(6)
When the operator causes manual travel for three rounds along the work target line Ls3 to perform reaping work and causes the combine harvester 1 to autonomously travel in the fourth and subsequent rounds, the vehicle control device 11 causes the combine harvester 1 to travel along the movement route R3 including switching between forward travel and backward travel at the corner of the unworked area as shown in Fig. 33A. Note that, when the turning travel shown in Fig. 33A is possible, the vehicle control device 11 causes the turning travel without performing the corner reaping work in the fourth round.

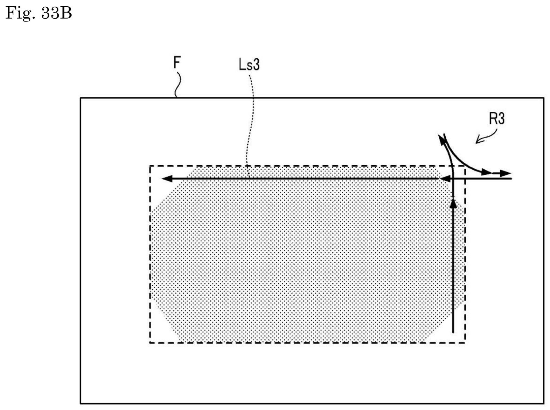

In addition, for example, as shown in Fig. 33B, when corners of a work route of the fourth round have been reaped by the travel and corner reaping work in the first to third rounds, the vehicle control device 11 can shift a turning area inward by including a forward turning route in the movement route R3, and thus, it is possible to prevent the combine harvester 1 from approaching the boundary of the field F or protruding out of the field F during travel along the movement route R3.

(7)
The vehicle control device 11 may cause the combine harvester 1 to autonomously travel while avoiding an autonomous travel prohibited area such as an entrance of the field F. For example, as shown in Fig. 26, when there is the entrance at the corner of the field F, the vehicle control device 11 causes the combine harvester 1 to perform the autonomous travel and the corner reaping work so as to avoid the entrance. In addition, for example, in a case where the autonomous travel prohibited area present on a circling work route and the circling work route intersects the autonomous travel prohibited area, the vehicle control device 11 may stop the autonomous travel when the combine harvester 1 reaches the autonomous travel prohibited area, and travel to avoid the autonomous travel prohibited area may be caused by manual operation of the operator.

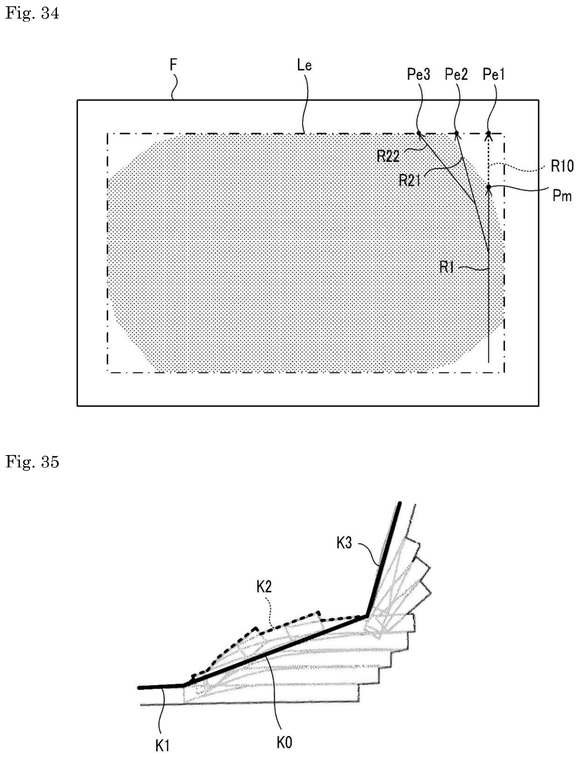

(8)
As shown in Fig. 34, when a portion of the work route R1 overlaps a reaped area, the vehicle control device 11 may exclude the portion overlapping the reaped area from a work target route and change the portion to a work-unnecessary route R10. In this case, the vehicle control device 11 determines that it is not necessary to travel on the work-unnecessary route R10, and when reaching an intermediate position Pm on the work route R1 (a terminal end position of an unworked area on the work route R1), raises the reaping unit 15 to stop the reaping work and causes travel toward the next work route without travel on the work-unnecessary route R10.

(9)
The vehicle control device 11 may have a search function of searching for a route for starting autonomous travel. For example, the vehicle control device 11 sets a predetermined search range in front of the combine harvester 1, and searches for a plurality of (for example, up to three) routes (candidate routes) included in the search range and close to the current position of the combine harvester 1. Then, the vehicle control device 11 determines, as an autonomous travel start route, the candidate route closest to the current direction and the current position of the combine harvester 1 among the plurality of candidate routes. Here, the vehicle control device 11 may set the search function to OFF on the corner reaping route. For example, when the combine harvester 1 autonomously travels on the corner reaping route of the second round, the vehicle control device 11 switches the search function to OFF in order to prevent an inclined route from being determined as the autonomous travel start route. In this case, the vehicle control device 11 determines the work route R1 on the outer peripheral side of the field F as the autonomous travel start route. In addition, when the combine harvester 1 stops after travel on the work route R1, the vehicle control device 11 determines, as the autonomous travel start route, the first inclined route R21 on the outer peripheral side of the field F out of the first inclined route R21 and the second inclined route R22.

In addition, when determining the autonomous travel start route, the vehicle control device 11 sets a starting end of the autonomous travel start route as a start position. In addition, when the combine harvester 1 is interrupted during travel on the corner reaping route, the vehicle control device 11 may set a starting end of an interrupted route as the start position.

(10)
In a case where the combine harvester 1 discharges grains stored in the storage tank 24 to a carrier vehicle at a predetermined discharge position in the field F during work, the vehicle control device 11 may perform control so as not to shift to discharge work during work on the corner reaping route. For example, when the combine harvester 1 circles, the vehicle control device 11 determines whether or not a total reaping amount obtained by adding a reaping amount for one round of the outer peripheral route and a reaping amount of the corner reaping route at each corner can be stored in the storage tank 24 (whether or not there is an empty space) before travel along the corner reaping route. When the vehicle control device 11 determines that the total reaping amount can be stored, travel for one round of the outer peripheral route is performed. On the other hand, when determining that the total reaping amount cannot be stored, the vehicle control device 11 generates a discharge route toward the discharge position at that time, and causes the combine harvester 1 to move along the discharge route and perform the discharge work. As a result, it is possible to prevent the discharge work from being required during the corner reaping work.

(11)
The vehicle control device 11 may perform a process of removing an inner work trajectory (point group) for a polygonal shape (an outer shape of an unworked area) defined by a work trajectory of the corner reaping work. For example, in the polygonal shape including actual work trajectories K1, K2, and K3 as shown in Fig. 35, when a point group of the work trajectory K2 is located so as to bite into the inside of the polygonal shape, the vehicle control device 11 may remove the work trajectory K2 and replace the work trajectory K2 with a work trajectory K0 connected to the work trajectories K1 and K3.

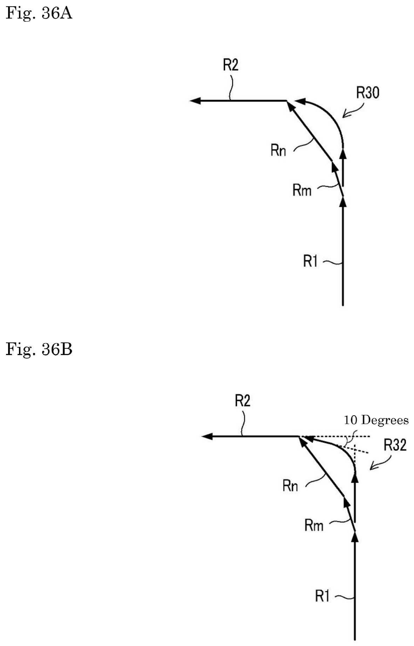

(12)
The generation processing unit 312 may generate a turning route after the corner reaping work as follows. Fig. 36A shows an example of a corner reaping route. For example, the corner reaping route includes the work route R1, a first inclined route Rm, and a second inclined route Rn. After finishing the corner reaping work on the corner reaping route, the combine harvester 1 travels along the movement route R3 toward the next work route R2. The generation processing unit 312 generates the movement route R3 including the turning route.

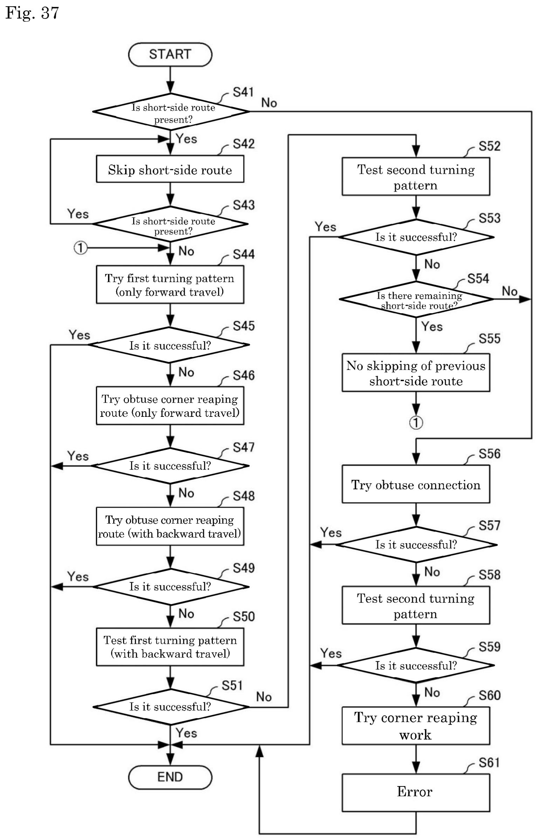

Specifically, the generation processing unit 312 generates the turning route by a procedure shown in Fig. 37. In step S41, the generation processing unit 312 determines whether or not a route (short-side route) having a length less than a predetermined length is included in the corner reaping route. When the short-side route is included in the corner reaping route (S41: Yes), the generation processing unit 312 causes the processing to proceed to step S42. When the short-side route is not included in the corner reaping route (S41: No), the generation processing unit 312 causes the processing to proceed to step S56. In the example shown in Fig. 36A, the first inclined route Rm and the second inclined route Rn, which are short-side routes, are included between the work route R1 and the work route R2.

The generation processing unit 312 skips (removes) the short-side route in step S42, and determines whether or not a short-side route is further included, in step S43. In step S43, when the short-side route is further included in the corner reaping route (S43: Yes), the generation processing unit 312 causes the processing to proceed to step S42 and skips the short-side route. The generation processing unit 312 repeats the above-described processing to skip the short-side route until the short-side route is no longer included.

When the short-side route is no longer included, the generation processing unit 312 tries a turning pattern connecting the work route R1 and the work route R2. Specifically, the generation processing unit 312 sequentially tries a plurality of turning patterns, determines a turning pattern that enables the combine harvester 1 to move to the work route R2, that is, enables the combine harvester 1 to directly face the work route R2 after turning, and generates the turning route.

First, in step S44, the generation processing unit 312 tries a first turning pattern (plain turn) including only forward travel on the shortest route having a narrow turning range. As shown in Fig. 36A, when the combine harvester 1 can move to the next work route R2 by a turning route R30 of the first turning pattern including only forward travel (S45: Yes), the generation processing unit 312 determines the turning route R30 of the first turning pattern (only forward travel). On the other hand, when the combine harvester 1 cannot move to the next work route R2 by the turning route R30 of the first turning pattern (S45: No), that is, when the combine harvester 1 cannot directly face the work route R2 after turning, the generation processing unit 312 causes the processing to proceed to step S46.

In step S46, the generation processing unit 312 tries a third turning pattern (obtuse corner reaping route) including only forward travel. For example, as shown in Fig. 36B, the generation processing unit 312 generates the third turning pattern (obtuse corner reaping route) including a forward straight route for travel on an extension line of the work route R1, a forward turning route connected to the forward straight route, and a forward straight route connected to the forward turning route and connected to the work route R2 at an obtuse angle (for example, 10 degrees). When the combine harvester 1 can move to the next work route R2 by a turning route R32 of the third turning pattern (S47: Yes), the generation processing unit 312 determines the turning route R32 of the third turning pattern (only forward travel). On the other hand, when the combine harvester 1 cannot move to the next work route R2 by the turning route R32 of the third turning pattern (S47: No), that is, when the combine harvester 1 cannot directly face the work route R2 after turning, the generation processing unit 312 causes the processing to proceed to step S48.

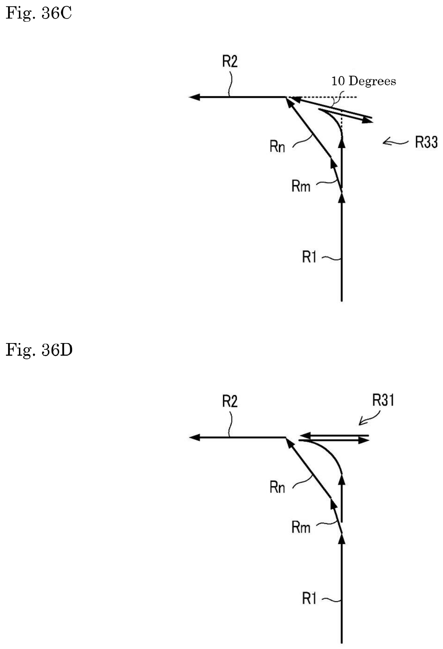

In step S48, the generation processing unit 312 tries the third turning pattern (obtuse corner reaping route) including backward travel. For example, as shown in Fig. 36C, the generation processing unit 312 generates the third turning pattern (obtuse corner reaping route) including a forward straight route for travel on the extension line of the work route R1, a forward turning route connected to the forward straight route, a backward straight route connected to the forward turning route, and a forward straight route connected to the backward straight route and connected to the work route R2 at an obtuse angle (for example, 10 degrees). When the combine harvester 1 can move to the next work route R2 by a turning route R33 of the third turning pattern (S49: Yes), the generation processing unit 312 determines the turning route R33 of the third turning pattern (including backward travel). On the other hand, when the combine harvester 1 cannot move to the next work route R2 by the turning route R33 of the third turning pattern (S49: No), that is, when the combine harvester 1 cannot directly face the work route R2 after turning, the generation processing unit 312 causes the processing to proceed to step S50.

In step S50, the generation processing unit 312 tries the first turning pattern (plain turn) including backward travel. For example, as shown in Fig. 36D, after travel on the corner reaping route, the generation processing unit 312 generates a turning route R31 of the first turning pattern including a forward straight route for travel on the extension line of the work route R1, a forward left-turning route, a backward straight route, and a forward straight route. When the combine harvester 1 can move to the next work route R2 by the turning route R31 of the first turning pattern (S51: Yes), the generation processing unit 312 determines the turning route R31 of the first turning pattern (including backward travel). On the other hand, when the combine harvester 1 cannot move to the next work route R2 by the turning route R31 of the first turning pattern (S51: No), that is, when the combine harvester 1 cannot directly face the work route R2 after turning, the generation processing unit 312 causes the processing to proceed to step S52. Note that the first turning pattern (only forward travel), the first turning pattern (including backward travel), the obtuse corner reaping route (only forward travel), and the obtuse corner reaping route (including backward travel) may be tried in any order.

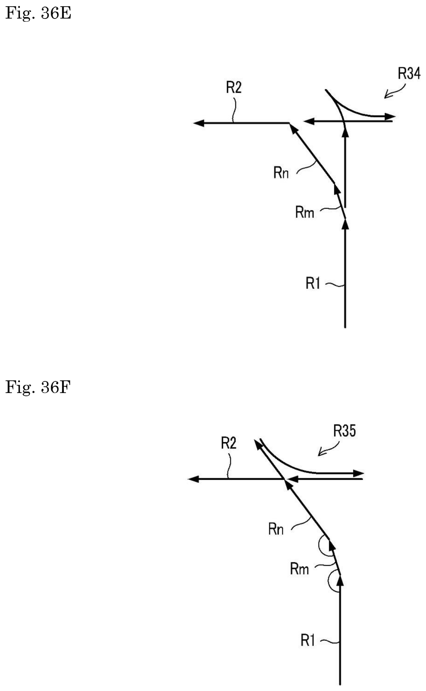

In step S52, the generation processing unit 312 tries a second turning pattern (α turn) having a wider turning range than the first turning pattern. For example, as shown in Fig. 36E, after travel on the corner reaping route, the generation processing unit 312 generates a turning route R34 of the second turning pattern including a forward straight route for travel on the extension line of the work route R1, a forward left-turning route, a backward right-turning route, a backward straight route, and a forward straight route. When the combine harvester 1 can move to the next work route R2 by the turning route R34 of the second turning pattern (S53: Yes), the generation processing unit 312 determines the turning route R34 of the second turning pattern. On the other hand, when the combine harvester 1 cannot move to the next work route R2 by the turning route R34 of the second turning pattern (S53: No), that is, when the combine harvester 1 cannot directly face the work route R2 after turning, the generation processing unit 312 causes the processing to proceed to step S54.

In step S54, the generation processing unit 312 determines whether or not there is a remaining short-side route at the corner reaping route, causes the processing to proceed to step S55 when there is a remaining short-side route (S54: Yes), and causes the processing to proceed to step S56 when there is no short-side route (S54: No).

In step S55, the generation processing unit 312 returns the previously skipped short-side route to the original state. Specifically, the skipping of the first inclined route Rm (short-side route) in the corner reaping route shown in Fig. 36A is returned to the original state. Thereafter, the processing proceeds to step S44, and the generation processing unit 312 tries each turning pattern and generates a route for movement from the work route R1 to the first inclined route Rm.

In step S56, the generation processing unit 312 tries the third turning pattern (obtuse angle connection route) set based on a connection angle for two consecutive routes. For example, as shown in Fig. 36F, when the connection angle between the work route R1 and the first inclined route Rm is an obtuse angle, the generation processing unit 312 tries the third turning pattern (obtuse angle connection route). When the combine harvester 1 can move to the next first inclined route Rm by a turning route according to the third turning pattern (S57: Yes), the generation processing unit 312 determines the turning route of the third turning pattern. On the other hand, when the combine harvester 1 cannot move to the next first inclined route Rm by the turning route of the third turning pattern (S57: No), that is, when the combine harvester 1 cannot directly face the first inclined route Rm after turning, the generation processing unit 312 causes the processing to proceed to step S58.

In step S58, the generation processing unit 312 tries the second turning pattern (α turn) for two consecutive routes. For example, as shown in Fig. 36F, when the combine harvester 1 can move from the second inclined route Rn to the next work route R2 by a turning route R35 of the second turning pattern (S59: Yes), the generation processing unit 312 determines the turning route R35 of the second turning pattern. On the other hand, when the combine harvester 1 cannot move to the next work route R2 by the turning route R35 of the second turning pattern (S59: No), that is, when the combine harvester 1 cannot directly face the work route R2 after turning, the generation processing unit 312 causes the processing to proceed to step S60.

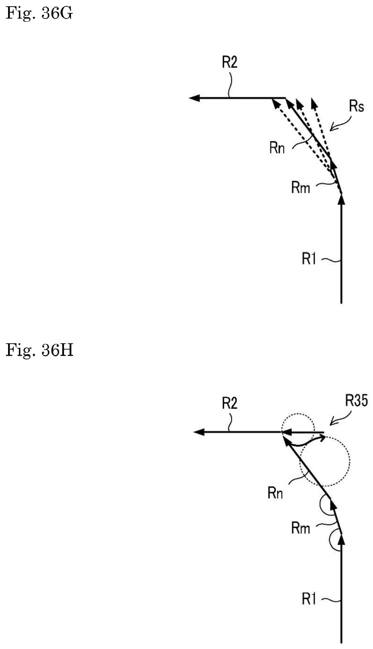

In step S60, the generation processing unit 312 performs corner reaping work to secure a turning area as shown in Fig. 36G. Specifically, the generation processing unit 312 further generates an inclined route Rs in addition to the first inclined route Rm and the second inclined route Rn, and executes the corner reaping work. When a turning route cannot be determined even by the processing in step S60, the generation processing unit 312 outputs an error (step S61) and ends the processing.

When a turning route of any turning pattern is determined, the generation processing unit 312 generates the movement route R3 including the turning route. As described above, the generation processing unit 312 does not generate a turning pattern (turning route) by determining a reaped area and an unreaped area, but generates a turning route by trying predetermined turning patterns and determining a turning pattern that enables turning.

As another embodiment, the generation processing unit 312 may generate a turning route for causing the combine harvester 1 to pivotally turn (make a pivot turn) and enter the work route R2 at a terminal end of the second inclined route Rn in Fig. 36F. In addition, as shown in Fig. 36H, the generation processing unit 312 may generate the turning route R35 including a backward right-turning route, a backward left-turning route, and a forward straight route from the terminal end of the second inclined route Rn.

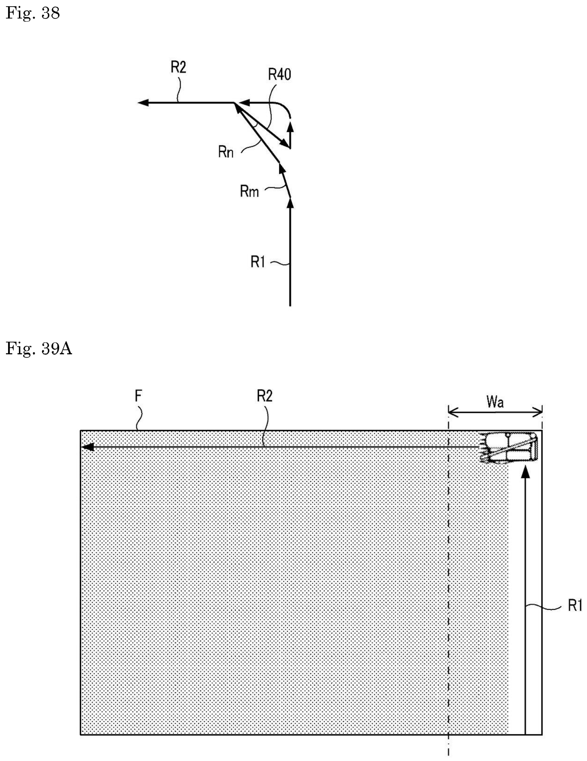

In addition, as shown in Fig. 38, the generation processing unit 312 may set a backward route R40 to have a predetermined angle with respect to the second inclined route Rn for turning travel after travel on the second inclined route Rn. The distance of the backward route R40 can be shortened by increasing the predetermined angle.

(13)
In the embodiment shown in (12), the generation processing unit 312 tries the predetermined turning patterns to determine a turning pattern that enables turning, and generates a turning route according to the turning pattern. As another embodiment, the generation processing unit 312 may determine a reaped area and an unreaped area to determine a turning pattern, and generate a turning route according to the turning pattern.

Specifically, the generation processing unit 312 determines whether or not reaping work at a corner of the field F has been completed up to a predetermined position inside the field F, and generates a corner reaping route (a corner work route of the present invention) for performing the reaping work at the corner when it is determined that the reaping work at the corner of the field F has not been completed up to the predetermined position. The corner reaping route includes one or a plurality of inclined routes inclined with respect to an outline side of the field F.

For example, as shown in Fig. 39A, when the combine harvester 1 moves from the work route R1 to the work route R2, it is necessary to secure the width Wa that enables the combine harvester 1 to turn (change a direction) at a corner area between the work routes R1 and R2. In a case where the width Wa that enables turning cannot be secured, there is a problem that an unworked area (unreaped area) is trodden during turning. That is, the predetermined position is a position where the combine harvester 1 can directly face the work route R2 after changing the direction toward the next work route R2 at the corner, and is a position of the width Wa from the outer edge portion of the field F. Note that, in a case where the work route R1 in the outermost periphery is set with a position having a predetermined margin (safety margin) inward from the outer edge portion of the field F as a work end (boundary line), the predetermined position is a position of the width Wa from the work end (boundary line). In addition, in a case where the work route R1 in the outermost periphery is set with a position (protrusion-allowable position) outside the outer edge portion of the field F as the work end (boundary line), the predetermined position is a position of the width Wa from the work end (boundary line).

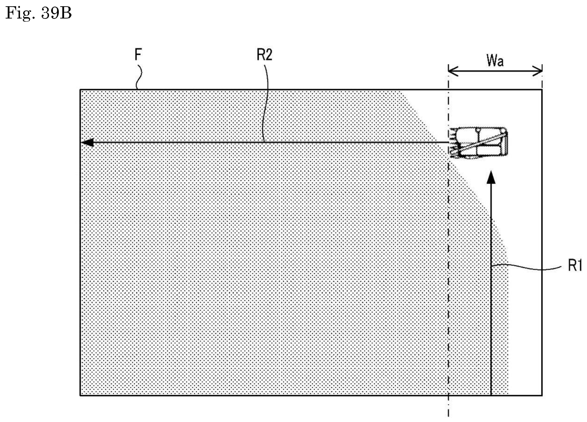

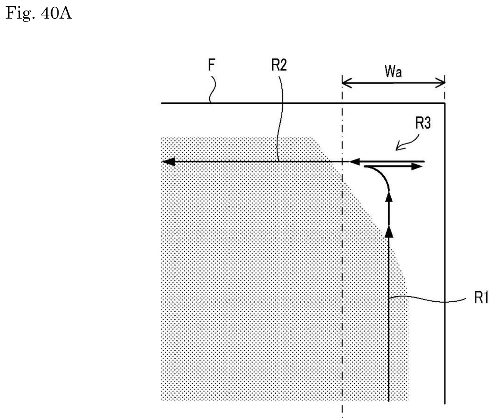

In addition, when determining that the reaping work of the corner of the field F has been completed up to the predetermined position (width Wa), the generation processing unit 312 generates the movement route R3 (a direction change route) for changing the direction of the combine harvester 1 at the corner. For example, as shown in Fig. 39B, when the reaping work has been completed up to the width Wa at the corner in a first stroke in the outermost periphery of the field F, the generation processing unit 312 generates the movement route R3 for movement from the work route R1 to the work route R2 at the corner in a second stroke. Specifically, as shown in Fig. 40A, the generation processing unit 312 generates the movement route R3 that includes a turning route of a turning pattern including a forward straight route for travel on the extension line of the work route R1, a forward left-turning route, a backward straight route, and a forward straight route.

As described above, the generation processing unit 312 may generate the movement route R3 without generating the corner reaping route when determining that the work at the corner has been completed up to the predetermined position. As a result, when it is not necessary to perform the corner reaping work, the combine harvester 1 can change the direction by traveling along the movement route R3 toward the work route R2 directly after performing work on the work route R1 without performing the corner reaping work (see Fig. 40A).

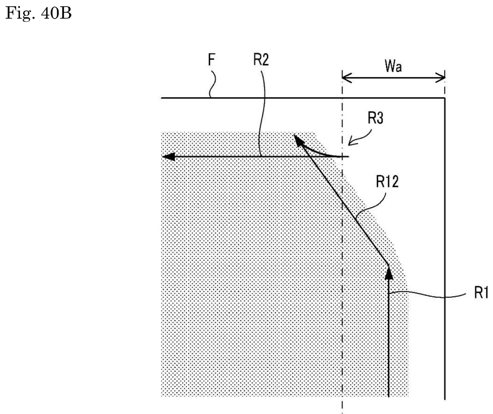

As another embodiment, as shown in Fig. 40B, the generation processing unit 312 may generate an inclined work route R12 (a corner reaping route) along a trajectory of the corner reaping work in the first stroke and generate a turning route (the movement route R3) connected to the inclined work route R12. Specifically, the generation processing unit 312 generates the movement route R3 that includes the turning route of a turning pattern including a backward right-turning route connected to the inclined work route R12, a backward straight route, and a forward straight route. As a result, the combine harvester 1 can perform turning travel to move to the work route R2 directly after performing the corner reaping work along the reaped area (unreaped area).

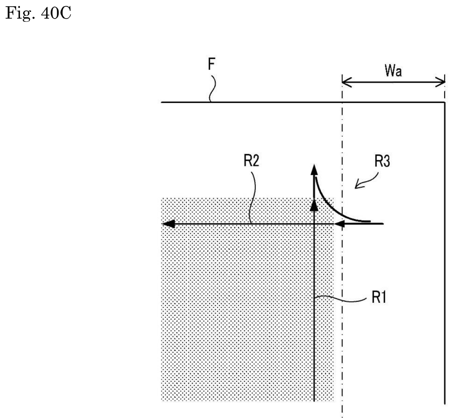

In addition, as another embodiment, as shown in Fig. 40C, in a case where an area where the direction can be changed by backward turning travel is secured at the corner, the generation processing unit 312 may generate the movement route R3 including a turning route of such a turning pattern. Note that the generation processing unit 312 may determine a turning pattern (direction change pattern) for changing the direction of the combine harvester 1 in accordance with a width of a work-completed area (a width of an area where turning is possible) of the corner.

In the above configuration, the generation processing unit 312 may execute a process of determining whether or not the work at the corner has been completed up to the predetermined position (width Wa) after the work in the outermost periphery of the field F is completed. For example, field registration is performed after the travel and work in the outermost periphery of the field F are completed, and when the operator creates a route after the field registration, the generation processing unit 312 determines whether or not the reaping work has been completed up to the predetermined position at the corner of a reaping target area.

In addition, in a case where the reaping work has been completed up to the predetermined position, generating the turning route shown in Fig. 40A at the corner may be used as a default setting, and a corner reaping route for performing the reaping work further inward at the corner of the reaping target area may be generated instead of the turning route according to any setting of the operator. In addition, the work and operation at the corner of the reaping target area may be settable such that the reaping work and the turning travel can be performed by manual travel and operation by the operator. For example, the reaping work may be set to be performed up to the corner by autonomous travel, and be temporarily stopped for switching to the manual travel mode when the combine harvester 1 reaches the corner.

Similarly, even in a case where the reaping work has not been completed up to the predetermined position, generating a corner reaping route for reaping the corner of the reaping target area by autonomous travel until the corner of the reaping target area reaches the predetermined position may be used as a default setting, and the work and operation at the corner of the reaping target area may be settable such that the reaping work and the turning travel can be performed by manual travel and operation of the operator according to any setting of the operator.

In addition, the generation processing unit 312 may cause the operation display unit 33 (an example of a display device of the present invention) to display information capable of identifying the predetermined position. For example, the generation processing unit 312 may superimpose and display a line indicating the position of the width Wa shown in Figs. 39A and 39B on a map screen indicating the field F. As a result, in a case where it is necessary to perform the reaping work up to a certain position by manual travel before starting the reaping work by autonomous travel, the line can be used as a guide line for a reaping completion position by the manual travel. Note that the generation processing unit 312 may display the line at an estimated position of the predetermined position until the shape of the field is registered by the travel and reaping work in the outermost periphery.

As described above, the generation processing unit 312 may determine a turning pattern (turning route) based on a reaped area and an unreaped area to generate a turning route. In addition, the vehicle control device 11 may cause the combine harvester 1 to autonomously travel along the turning route generated based on the reaped area and the unreaped area. Specifically, the generation processing unit 312 determines whether or not the work at a corner of the field F has been completed up to a predetermined position (the width Wa) inside the field F, and generates a corner reaping route for performing the work at the corner when it is determined that the work at the corner has not been completed up to the predetermined position. In addition, when determining that the work at the corner has been completed up to the predetermined position, the generation processing unit 312 generates a direction change route (the movement route R3) without generating the corner reaping route.

According to the above configuration, since an area for the combine harvester 1 to change the direction at the corner can be secured, it is possible to prevent contact with or treading on an object to be reaped. Therefore, the work accuracy of the work at the corner of the field F can be improved.

In each of the above-described embodiments, the combine harvester 1 has been described as an example of the work vehicle. However, the work vehicle of the present invention is not limited to the combine harvester 1, and may be various work vehicles such as a tractor, a transplanter, and a construction machine. In each of the above-described embodiments, the configuration in which the work vehicle manually travels (is manually steered) in the outermost peripheral area F0 and autonomously travels (is automatically steered) in the inner peripheral area F1 has been described. However, the present invention may be configured such that the work vehicle autonomously travels (is automatically steered) in both the outermost peripheral area F0 and the inner peripheral area F1.

### [Supplementary note 1 of invention]

Hereinafter, an overview of the invention extracted from the above-described embodiment ([Method for generating inner peripheral route Rb (autonomous travel route) (Second configuration)]) will be supplementarily described. Note that configurations and processing functions, which are described in the following supplementary notes, can be selected and freely combined.

### <Supplementary note 1>

A route generation method for generating a route for a work vehicle to perform predetermined work on a work target at a corner of a work area, the route generation method including:
generating a first route based on an outermost peripheral position of an unworked area in the work area or an outer edge portion of the work area; and
generating a second route on an inner side of the first route based on the first route, at least a part of the second route having a predetermined inclination angle with respect to the first route.

### <Supplementary note 2>

The route generation method according to Supplementary note 1, wherein
the first route and the second route are autonomous travel routes generated in an inner area inside an outermost peripheral area of the work area, and
the work in the inner area is performed after the work in the outermost peripheral area has finished.

### <Supplementary note 3>

The route generation method according to Supplementary note 2, wherein the first route is generated based on the outermost peripheral position of the unworked area specified when the outermost peripheral area has been worked.

### <Supplementary note 4>

The route generation method according to Supplementary note 2 or 3, wherein the first route is generated based on the outer edge portion of the work area specified when the outermost peripheral area has been worked.

### <Supplementary note 5>

The route generation method according to any one of Supplementary notes 1 to 4, wherein the inclination angle is determined to prevent a vehicle body of the work vehicle from protruding out of the work area when the work vehicle moves from the first route to the second route.

### <Supplementary note 6>

The route generation method according to any one of Supplementary notes 1 to 5, wherein the inclination angle is determined based on a work width corresponding to the first route, a work width corresponding to the second route, and a distance by which the work vehicle travels backward after finishing the work on the first route.

### <Supplementary note 7>

The route generation method according to any one of Supplementary notes 1 to 6, wherein the inclination angle is set in accordance with operation of an operator.

### <Supplementary note 8>

The route generation method according to Supplementary note 7, further including causing an operation terminal to display a worked area where the work has finished and an estimated work area in a case where the work is to be performed along the first route and the second route, and receiving operation to set the inclination angle from the operator.

### <Supplementary note 9>

The route generation method according to any one of Supplementary notes 1 to 8, wherein
the second route includes a plurality of inclined routes,
a first inclined route having a first inclination angle with respect to the first route is generated on the inner side of the first route, and
a second inclined route having a second inclination angle, larger than the first inclination angle, with respect to the first route is generated on an inner side of the first inclined route.

### <Supplementary note 10>

The route generation method according to any one of Supplementary notes 1 to 9, wherein the first route is shifted to eliminate a gap when the gap is generated between a work width corresponding to the first route and the outermost peripheral position.

### <Supplementary note 11>

The route generation method according to any one of Supplementary notes 1 to 10, wherein
a work target line representing an outermost peripheral area of the work area is set, and
the inclination angle is determined based on the work target line.

### <Supplementary note 12>

A route generation program for generating a route for performing predetermined work on a work target at a corner of a work area,
the route generation program causing one or a plurality of processors to execute:
generating a first route based on an outermost peripheral position of an unworked area in the work area or an outer edge portion of the work area; and
generating a second route on an inner side of the first route based on the first route, at least a part of the second route having a predetermined inclination angle with respect to the first route.

### <Supplementary note 13>

A route generation system that generates a route for performing predetermined work on a work target at a corner of a work area,
the route generation system being configured to generate a first route based on an outermost peripheral position of an unworked area in the work area or an outer edge portion of the work area, and to generate a second route on an inner side of the first route based on the first route, at least a part of the second route having a predetermined inclination angle with respect to the first route.

### [Supplementary note 2 of invention]

Hereinafter, an overview of the invention extracted from the above-described embodiment ([Control method for autonomous travel of combine harvester 1 (Third configuration)]) will be supplementarily described. Note that configurations and processing functions, which are described in the following supplementary notes, can be selected and freely combined.

### <Supplementary note 1>

An autonomous travel method for causing a work vehicle to autonomously travel along a target route, which includes a plurality of work routes for the work vehicle to autonomously travel while performing predetermined work in a work area, the autonomous travel method including
determining, for each of the work routes, whether or not to cause the work vehicle to autonomously travel based on work region information including information on an unworked region where the work has not finished in the work area and information on a worked region where the work has finished.

### <Supplementary note 2>

The autonomous travel method according to Supplementary note 1, wherein when a whole work target area corresponding to the work route is the worked region, the work route is determined as a route on which the work vehicle is not caused to autonomously travel.

### <Supplementary note 3>

The autonomous travel method according to Supplementary note 1 or 2, wherein when at least a part of a work target area corresponding to the work route is the unworked region, the work route is determined as a route on which the work vehicle is caused to autonomously travel.

### <Supplementary note 4>

The autonomous travel method according to Supplementary note 3, wherein the work vehicle is caused to autonomously travel up to a terminal end of the unworked region in the work target area corresponding to the work route.

### <Supplementary note 5>

The autonomous travel method according to Supplementary note 3 or 4, wherein even if the work route is determined as the route on which the work vehicle is caused to autonomously travel, the autonomous travel is not caused on the work route when predetermined operation by an operator is received.

### <Supplementary note 6>

The autonomous travel method according to any one of Supplementary notes 1 to 5, wherein the unworked region and the worked region are determined based on a passing position of a work machine when the work vehicle has traveled, and a result of the determination is registered in the work region information.

### <Supplementary note 7>

The autonomous travel method according to Supplementary note 6, wherein the work area is divided into a plurality of divisions, and either the unworked region or the worked region is determined for each of the divisions.

### <Supplementary note 8>

The autonomous travel method according to any one of Supplementary notes 1 to 7, wherein the plurality of work routes are generated in accordance with a corner of the work area and include a first route and a second route on an inner side of the first route, the second route having a predetermined inclination angle with respect to the first route.

### <Supplementary note 9>

An autonomous travel program for causing a work vehicle to autonomously travel along a target route, which includes a plurality of work routes for the work vehicle to autonomously travel while performing predetermined work in a work area, the autonomous travel program causing one or a plurality of processors to execute
determining, for each of the work routes, whether or not to cause the work vehicle to autonomously travel based on work region information including information on an unworked region where the work has not finished in the work area and information on a worked region where the work has finished.

### <Supplementary note 10>

An autonomous travel system that causes a work vehicle to autonomously travel along a target route, which includes a plurality of work routes for the work vehicle to autonomously travel while performing predetermined work in a work area,
the autonomous travel system being configured to determine, for each of the work routes, whether or not to cause the work vehicle to autonomously travel based on work region information including information on an unworked region where the work has not finished in the work area and information on a worked region where the work has finished.

### [Supplementary note 3 of invention]

Hereinafter, an overview of the invention extracted from the above-described embodiment ([Operation control of work machine (reaping unit 15) (Fourth configuration)]) will be supplementarily described. Note that configurations and processing functions, which are described in the following supplementary notes, can be selected and freely combined.

### <Supplementary note 1>

An autonomous travel method for causing a work machine to perform predetermined work while causing a work vehicle to autonomously travel along a target route in a work area, the autonomous travel method including
controlling an operation of the work machine based on work region information including information on an unworked region where the work has not finished in the work area and information on a worked region where the work has finished.

### <Supplementary note 2>

The autonomous travel method according to Supplementary note 1, wherein the work machine is set to a work position before the work vehicle enters the unworked region from the worked region.

### <Supplementary note 3>

The autonomous travel method according to Supplementary note 1 or 2, wherein the work machine is set to a non-work position after the work vehicle enters the worked region from the unworked region.

### <Supplementary note 4>

The autonomous travel method according to any one of Supplementary notes 1 to 3, wherein the work machine is set to a non-work position when a distance from a starting end of the worked region to a starting end of a next unworked region is a predetermined distance or more when the work vehicle enters the worked region from the unworked region.

### <Supplementary note 5>

The autonomous travel method according to Supplementary note 4, wherein the work machine is set to a first position closer to a work position than the non-work position or to the work position when the distance from the starting end of the worked region to the starting end of the next unworked region is less than the predetermined distance when the work vehicle enters the worked region from the unworked region.

### <Supplementary note 6>

The autonomous travel method according to Supplementary note 5, wherein
the work machine is movable up and down between an uppermost position that is the non-work position and a lowermost position that is the work position, and
the first position is the lowermost position or a position between the lowermost position and the uppermost position.

### <Supplementary note 7>

The autonomous travel method according to any one of Supplementary notes 1 to 6, wherein an operation timing of the work machine is determined based on a traveling vehicle speed of the work vehicle and a movement time required for the work machine to move from a non-work position to a work position.

### <Supplementary note 8>

The autonomous travel method according to any one of Supplementary notes 1 to 7, wherein the operation of the work machine is controlled based on the work region information when the work vehicle is caused to autonomously travel along a corner reaping route generated for a corner of the work area.

### <Supplementary note 9>

The autonomous travel method according to Supplementary note 8, wherein the work machine is set to a first non-work position and the work vehicle is caused to travel backward when the work vehicle enters the worked region from the unworked region on the corner reaping route.

### <Supplementary note 10>

The autonomous travel method according to Supplementary note 8 or 9, wherein the work machine is set to an uppermost position when the work vehicle enters the worked region from the unworked region on a final route of the corner reaping route.

### <Supplementary note 11>

The autonomous travel method according to any one of Supplementary notes 8 to 10, wherein the corner reaping route includes a first route and a second route on an inner side of the first route, the second route having a predetermined inclination angle with respect to the first route.

### <Supplementary note 12>

An autonomous travel program for causing a work machine to perform predetermined work while causing a work vehicle to autonomously travel along a target route in a work area, the autonomous travel program causing one or a plurality of processors to execute
controlling an operation of the work machine based on work region information including information on an unworked region where the work has not finished in the work area and information on a worked region where the work has finished.

### <Supplementary note 13>

An autonomous travel system that causes a work machine to perform predetermined work while causing a work vehicle to autonomously travel along a target route in a work area,
the autonomous travel system being configured to control an operation of the work machine based on work region information including information on an unworked region where the work has not finished in the work area and information on a worked region where the work has finished.

### [Supplementary note 4 of invention]

Hereinafter, an overview of the invention extracted from the above-described embodiment (the above-described (13)) will be supplementarily described. Note that configurations and processing functions, which are described in the following supplementary notes, can be selected and freely combined.

### <Supplementary note 1>

A route generation method for generating an autonomous travel route for a work vehicle to perform predetermined work on a work target in a work area, the route generation method including:
determining whether or not the work at a corner of the work area has been completed up to a predetermined position inside the work area; and
generating a corner work route for performing the work at the corner when it is determined that the work at the corner of the work area has not been completed up to the predetermined position.

### <Supplementary note 2>

The route generation method according to Supplementary note 1, wherein when it is determined that the work at the corner of the work area has been completed up to the predetermined position, a direction change route for changing a direction of the work vehicle at the corner is generated.

### <Supplementary note 3>

The route generation method according to Supplementary note 1 or 2, wherein when it is determined that the work at the corner of the work area has been completed up to the predetermined position, a direction change route for changing a direction of the work vehicle at the corner is generated without generating the corner work route.

### <Supplementary note 4>

The route generation method according to any one of Supplementary notes 1 to 3, wherein whether or not the work at the corner has been completed up to the predetermined position is determined after the work in an outermost periphery of the work area has been completed.

### <Supplementary note 5>

The route generation method according to any one of Supplementary notes 1 to 4, further including causing a display device to display information capable of identifying the predetermined position.

### <Supplementary note 6>

The route generation method according to any one of Supplementary notes 1 to 5, wherein the predetermined position is a position where the work vehicle is capable of directly facing a next work route after a direction of the work vehicle is changed toward the next work route at the corner.

### <Supplementary note 7>

The route generation method according to any one of Supplementary notes 1 to 6, wherein the corner work route includes one or a plurality of inclined routes inclined with respect to an outline side of the work area.

### <Supplementary note 8>

The route generation method according to any one of Supplementary notes 1 to 7, further including determining a direction change pattern for changing a direction of the work vehicle in accordance with a width of a work-completed area of the corner.

### <Supplementary note 9>

A route generation program for generating an autonomous travel route for a work vehicle to perform predetermined work on a work target in a work area, the route generation program causing one or a plurality of processors to execute:
determining whether or not the work at a corner of the work area has been completed up to a predetermined position inside the work area; and
generating a corner work route for performing the work at the corner when it is determined that the work at the corner of the work area has not been completed up to the predetermined position.

### <Supplementary note 10>

A route generation system that generates an autonomous travel route for a work vehicle to perform predetermined work on a work target in a work area,
the route generation system including a generation processing unit that determines whether or not the work at a corner of the work area has been completed up to a predetermined position inside the work area, and generates a corner work route for performing the work at the corner when it is determined that the work at the corner of the work area has not been completed up to the predetermined position.

Note that the present invention can also adopt a configuration in which the respective features of [Supplementary notes 1 to 4 of invention] are appropriately combined.

### LIST OF REFERENCE SIGNS

- 10: Travel system (autonomous travel system)
- 1: Combine harvester (work vehicle)
- 11: Vehicle control device
- 15: Reaping unit
- 111: Travel processing unit
- 112: Work processing unit
- 113: Registration processing unit
- 3: Operation terminal
- 31: Operation control unit
- 311: Setting processing unit
- 312: Generation processing unit
- 313: Output processing unit
- F: Field (work area)
- F0: Outermost peripheral area
- F1: Inner peripheral area
- Fc1: Outermost peripheral position
- C1: Work region information
- S: Start position
- G: End position
- H0: Non-work height
- H1: Work height
- H2: Intermediate height
- K: Division
- L0: Reference line
- L1: Inclined route
- L2: Inclined route
- La: Outline
- Ls: Work target line
- R: Target route
- R1: Work route (first route)
- R21: First inclined route (second route)
- R22: Second inclined route (second route)
- Ra: Outermost peripheral route
- Rb: Inner peripheral route (autonomous travel route)

## Claims

1. An autonomous travel method for causing a work machine to perform predetermined work while causing a work vehicle to autonomously travel along a target route in a work area, the autonomous travel method comprising
controlling an operation of the work machine based on work region information including information on an unworked region where the work has not finished in the work area and information on a worked region where the work has finished.

2. The autonomous travel method according to claim 1, wherein the work machine is set to a work position before the work vehicle enters the unworked region from the worked region.

3. The autonomous travel method according to claim 1, wherein the work machine is set to a non-work position after the work vehicle enters the worked region from the unworked region.

4. The autonomous travel method according to claim 1, wherein the work machine is set to a non-work position when a distance from a starting end of the worked region to a starting end of a next unworked region is a predetermined distance or more when the work vehicle enters the worked region from the unworked region.

5. The autonomous travel method according to claim 4, wherein the work machine is set to a first position closer to a work position than the non-work position or to the work position when the distance from the starting end of the worked region to the starting end of the next unworked region is less than the predetermined distance when the work vehicle enters the worked region from the unworked region.

6. The autonomous travel method according to claim 5, wherein
the work machine is movable up and down between an uppermost position that is the non-work position and a lowermost position that is the work position, and
the first position is the lowermost position or a position between the lowermost position and the uppermost position.

7. The autonomous travel method according to claim 1, wherein an operation timing of the work machine is determined based on a traveling vehicle speed of the work vehicle and a movement time required for the work machine to move from a non-work position to a work position.

8. The autonomous travel method according to any one of claims 1 to 7, wherein the operation of the work machine is controlled based on the work region information when the work vehicle is caused to autonomously travel along a corner reaping route generated for a corner of the work area.

9. The autonomous travel method according to claim 8, wherein the work machine is set to a first non-work position and the work vehicle is caused to travel backward when the work vehicle enters the worked region from the unworked region on the corner reaping route.

10. The autonomous travel method according to claim 8, wherein the work machine is set to an uppermost position when the work vehicle enters the worked region from the unworked region on a final route of the corner reaping route.

11. The autonomous travel method according to claim 8, wherein the corner reaping route includes a first route and a second route on an inner side of the first route, the second route having a predetermined inclination angle with respect to the first route.

12. An autonomous travel program for causing a work machine to perform predetermined work while causing a work vehicle to autonomously travel along a target route in a work area, the autonomous travel program causing one or a plurality of processors to execute
controlling an operation of the work machine based on work region information including information on an unworked region where the work has not finished in the work area and information on a worked region where the work has finished.

13. An autonomous travel system that causes a work machine to perform predetermined work while causing a work vehicle to autonomously travel along a target route in a work area,
the autonomous travel system being configured to control an operation of the work machine based on work region information including information on an unworked region where the work has not finished in the work area and information on a worked region where the work has finished.
